# EUROPÄISCHE PATENTSCHRIFT

(11) **EP 1 144 989 B1**
(45) Veröffentlichungstag und Bekanntmachung des Hinweises auf die Patenterteilung: **15.01.2003**
(21) Anmeldenummer: 99952429.1
(22) Anmeldetag: 17.08.1999
(51) Int. Cl.: G01N 27/00, G01B 7/34

(54) **NANOTOMOGRAPHIE**
NANOTOMOGRAPHY
NANOTOMOGRAPHIE

(30) Priorität: 23.12.1998 DE 19859877
(43) Veröffentlichungstag der Anmeldung: 17.10.2001
(73) Patentinhaber: Magerle, Robert, 95444 Bayreuth (DE)
(72) Erfinder: Magerle, Robert, 95444 Bayreuth (DE)
(74) Vertreter: Bauer, Wulf, Dr.
(86) Internationale Anmeldenummer: DE9902577
(87) Internationale Veröffentlichungsnummer: WO00039569

(56) Entgegenhaltungen:
- RETTIG R ET AL: "Atomic scale properties of interior interfaces of semiconductor heterostructures as determined by quasi-digital highly selective etching and atomic force microscopy" EIGHTH INTERNATIONAL CONFERENCE ON MODULATED SEMICONDUCTOR STRUCTURES. MSS8, SANTA BARBARA, CA, USA, 14-18 JULY 1997, Bd. 2, Nr. 1-4, Seiten 277-281, XP000870399 Physica E, 15 July 1998, Elsevier, Netherlands ISSN: 1386-9477
- CHANG D C ET AL: "Micro structural investigation of porous silicon depth profile by direct surface force microscopy" SURFACE/INTERFACE AND STRESS EFFECTS IN ELECTRONIC MATERIAL NANOSTRUCTURES. SYMPOSIUM, SURFACE/INTERFACE AND STRESS EFFECTS IN ELECTRONIC MATERIAL NANOSTRUCTURES. SYMPOSIUM, BOSTON, MA, USA, 27 NOV.-1 DEC. 1995, Seiten 173-177, XP000870218 1996, Pittsburgh, PA, USA, Mater. Res. Soc, USA
- KALUKIN A R ET AL: "Effects of feature orientation in tomographic reconstructions" X-RAY MICROFOCUSING: APPLICATIONS AND TECHNIQUES, SAN DIEGO, CA, USA, 22-23 JULY 1998, Bd. 3449, Seiten 36-44, XP000869951 Proceedings of the SPIE - The International Society for Optical Engineering, 1998, SPIE-Int. Soc. Opt. Eng, USA ISSN: 0277-786X
- HARRISON C ET AL: "Layer by layer imaging of diblock copolymer films with a scanning electron microscope" POLYMER,GB,ELSEVIER SCIENCE PUBLISHERS B.V, Bd. 39, Nr. 13, Seite 2733-2744 XP004112216 ISSN: 0032-3861
- VAEZ-IRAVANI M ET AL: "CORRELATIVE IMAGING IN SCANNING NEAR-FIELD OPTICAL MICROSCOPY" JOURNAL OF VACUUM SCIENCE AND TECHNOLOGY: PART A,US,AMERICAN INSTITUTE OF PHYSICS. NEW YORK, Bd. 11, Nr. 4, PART 01, Seite 742-747 XP000403702 ISSN: 0734-2101
- PATENT ABSTRACTS OF JAPAN vol. 1996, no. 10, 31. Oktober 1996 (1996-10-31) -& JP 08 160058 A (NEC CORP), 21. Juni 1996 (1996-06-21)
- DATABASE WPI Section Ch, Week 197801 Derwent Publications Ltd., London, GB; Class L03, AN 1978-00976A XP002128666 -& JP 52 137396 A (HITACHI LTD), 16. November 1977 (1977-11-16)

## Beschreibung

Gegenstand der vorliegenden Erfindung ist eine neuartige Vorrichtung und ein neuartiges Verfahren, welche es erlaubt, die räumliche Struktur einer zu untersuchenden Probe mit hoher räumlicher Auflösung zu ermitteln. Gleichzeitig können eine Vielzahl verschiedener Materialparameter erfaßt werden, die im wesentlichen nur durch die spezielle Wahl der zugrundeliegenden Mikroskopiemethode beschränkt werden. Prinzipiell sind mit dem erfindungsgemäßen Verfahren räumliche Auflösungen im atomaren Bereich (100 Picometer) möglich.

Im Bereich der Mikroskopieverfahren steht mittlerweile eine große Vielzahl an Methoden zur Verfügung. Am weitesten bekannt sind optische Mikroskopiemethoden, deren Auflösungsvermögen prinzipiell auf einen Bereich von einigen hundert Nanometern beschränkt ist. Ein deutlich höheres Auflösungsvermögen erreichen Elektronenmikroskopiemethoden, die in verschiedenen Spielarten existieren. Mittels der Elektronenmikroskopie kann routinemäßig eine Auflösung im Bereich von einigen Nanometern erreicht werden. Im Laufe der letzten 15 Jahre sind weitere Mikroskopiemethoden hinzugetreten, dabei sind als herausragende Vertreter vor allem die sogenannten Rastersondenmikroskopiemethoden zu nennen, die unter Verwendung spezieller Sonden Auflösungen im atomaren Bereich ermöglichen und auf eine Vielzahl von Materialeigenschaften empfindlich sein können. Als Sonden können beispielsweise scharfe metallische Spitzen, scharfe Spitzen an einem Cantilever (einem durch äußere Kräfte zu verbiegenden dünnen Balken) oder auch ausgezogenc Spitzen von optischen Wellenleitern dienen. Diese Sonden werden im allgemeinem in einem sehr geringen Abstand (einige Nanometer und weniger) über die Probe geführt (die Probe wird "abgerastert") und gleichzeitig bestimmte Materialparameter erfaßt. Als Regelungsparameter zur Abstandsregelung zwischen Probe und Spitze können beispielsweise elektrische Ströme zwischen Probenoberfläche und Spitze, eine mechanische Verbiegung oder Verdrillung des Cantilevers, die Zahl vom Wellenleiter aufgefangener Photonen oder auch die Dämpfung mechanischer Schwingungen der Sonde dienen.

Allen diesen nur exemplarisch genannten Mikroskopiemethoden ist jedoch gemein, daß mit ihrer Hilfe nur eine im wesentlichen zweidimensionale Abbildung der zur umersuchenden Objekte möglich ist. Ist man an der räumlichen Struktur von zu untersuchenden Proben interessiert, so ist die Menge der zur Verfügung stehenden Untersuchungsmethoden stark eingeschränkt.

Eine größere Zahl von Methoden zur Strukturaufklärung untersucht die räumliche Struktur der Proben nicht direkt, sondern über den Umweg sogenannter Streumethoden (z.B. Röntgen- oder Neutronenstreuung). Diese Streumethoden jedoch sind vor allem anzuwenden auf Objekte, die regelmäßig aufgebaut sind. Streumethoden eignen sich demzufolge insbesondere dazu, Kristallstrukturen aufzuklären, sind aber nicht oder nur mit starken Einschränkungen auf Proben mit unregelmäßiger Struktur anzuwenden.

Eine Mehrzahl von Methoden, mit denen die räumliche Struktur einer unregelmäßigen Probe mit hoher räumlicher Auflösung erfaßt werden kann, basiert darauf, daß das Probenvolumen in eine Folge von Schichten aufgeteilt wird und von jeder Schicht eine Karte der interessierenden Eigenschaft erstellt wird. Aus einem Stapel solcher Karten wird dann mit geeigneten mathematischen Verfahren die räumliche Verteilung der interessierenden Eigenschaft rekonstruiert. Auf dieser Basis arbeiten unterschiedliche Verfahren, die sich jeweils in der Art der erfaßten Eigenschaft (dem Kontrastverfahren) und der Art und Weise unterscheiden, in der das Probenvolumen in einzelne Schichten zerteilt und von jeder Schicht die Karte der interessierenden Eigenschaft erzeugt wird.

Die heute bekanntesten Vertreter dieser Verfahren sind die hauptsächlich in der Medizin angewendete Röntgen- und Kernspintomographie. Bei beiden Verfahren wird zerstörungsfrei durch geeignete Meßtechnik nur eine einzelne dünne Schicht des Probenvolumens erfaßt und durch mathematische Verfahren aus einer großen Zahl aus verschiedenen Winkeln aufgenommen Projektionen der Schicht eine Karte der interessierenden Eigenschaft in dieser Schicht erstellen. Mit beiden Methoden kann eine räumliche Auflösung von einigen Mikrometern erreicht werden. In die gleiche Klasse fällt die konfokale Mikroskopie, bei der ein Bild der Fokusebene mit sehr geringer Tiefenschärfe erzeugt werden kann. Allerdings ist bei der konfokalen Mikroskopie die räumliche Auflösung durch die Wellenlänge des verwendeten Lichts auf einige hundert Nanometer beschränkt und es können nur optisch transparente Proben untersucht werden.

Bei den historisch ersten Verfahren zur räumlichen Rekonstruktion wurde die Probe mechanisch mit einem Mikrotom in eine Serie einzelner dünner Schichten zerteilt. Von diesen Dünnschnitten wurden dann mit Hilfe optischer Mikroskopie eine Folge an Karten erstellt aus denen die räumliche Form der untersuchten Objekte rekonstruiert werden konnte. Heute können mit einem Ultramikrotom einige zig Nanometer dünne Schichten hergestellt und mit dem Rasterelektronenmikroskop mit hoher lateraler Auflösung (in der x-y-Ebene) untersucht werden (einige Nanometer sind erreichbar). Allerdings ist die Tiefenauflösung (in z-Richtung) dieses Verfahrens durch die Dicke der verwendeten Dünnschnitte begrenzt. Diese ist wiederum durch die mechanische Stabilität des untersuchten Materials auf einige zig Nanometer begrenzt. Ein sehr großer Nachteil dieses Verfahrens ist außerdem der hohe Zeit- und Personalaufwand, da die zuverlässige Herstellung, Handhabung und Untersuchung der extrem dünnen Serienschnitte sehr viel Erfahrung erfordert und zu einem großen Teil manuell erfolgt. Zudem können nicht von allen Materialien so dünne Schnitte hergestellt werden, so daß Metalle, Keramiken, Halbleiter und viele andere bedeutende Werkstoffen nicht mit diesem Verfahren untersucht werden können.

Die Röntgen- und Kcrnspintomographie verwendet ausgiebig mathematische Verfahren, um aus einer großen Zahl aus verschiedenen Winkeln aufgenommen Projektionen die Verteilung der untersuchten Eigenschaft in einer einzelnen untersuchten Schicht zu rekonstruieren. Ähnliche Verfahren können auch bei der Elektronenmikroskopie angewendet werden. In besonderen Fällen kann eine Auflösung im Bereich von Nanometern erreicht werden. Allerdings ist bei den dafür notwendigen dünnen Dünnschnitten von einigen zig Nanometern Dicke die maximale Belichtungsdauer mit Elektronen beschränkt, die ein einzelner Dünnschnitt verträgt, bevor er durch den Elektronenstrahl zerstört wird, was zur Folge hat, daß die begrenzte Gesamtbelichtungsdauer auf die einzelnen Projektionen aufgeteilt werden muß und dadurch die Bildqualität der einzelnen Projektionen stark eingeschränkt ist. Aus diesem Grund müssen bei der Bildrekonstruktion Modellannahmen über die Probensymmetrie gemacht werden, um eine Auflösung im Bereich von Nanometern erreichen zu können. Unregelmäßige Strukturen in der Probe können daher nicht mit einer so hohen räumliche Auflösung erfaßt werden.

Das Problem der Schnittherstellung und der mechanischen Stabilität der Dünnschnitte umgehen Verfahren, bei denen die Probe schichtweise abgetragen und nach jedem Abtragvorgang die Verteilung der interessierenden Eigenschaft auf der freigelegten Oberfläche bestimmt wird. Die Methode der dynamischen Sekundärionenmassenspektroskopie (SIMS) arbeitet nach diesem Verfahren. Allerdings ist dabei die laterale Auflösung (in der x-y-Ebene) durch den Durchmesser des Ionenstrahls begrenzt, der die Sekundärionen erzeugt, und der im besten Fall etwa 50 nm groß ist. Die erreichbare Tiefenauflösung (in z-Richtung) ist bei der dynamischen SIMS durch die Eindringtiefe des lonenstrahls ins Material (etwa 10 nm und mehr) und die Rauhigkeit der Probenoberfläche vor und insbesondere während des Abtragens begrenzt. In sehr vielen Fällen und besonders bei heterogenen Proben erfolgt der Materialabtrag ungleichmäßig, da die Abtragrate eine materialspezifische Eigenschaft ist, was zu einer Aufrauhung der Probenoberfläche während der Untersuchung führt. Dies hat zur Folge. daß die detektierte Eigenschaft (z.B. die Konzentration eines bestimmten Elements) gleichzeitig aus verschiedenen Tiefenbereichen stammt, was die Tiefenauflösung der dynamischen SIMS drastisch verschlechtert. Sehr viele interessante (weil heterogene) Proben können daher nicht mit dieser Methode untersucht werden, da für sie keine für die dynamische SIMS geeigneten Verfahren zum gleichmäßigen Abtragen bekannt sind. Das Problem der Probenrauhigkeit und der ungleichmäßigen Abtragrate verhindert auch, daß durch Kombination der schichtweisen Abtragtechnik mit anderen lateral hochauflösenden Verfahren, wie z.B. der Rasterelektronenmikroskopie, die Struktur heterogener Proben mit hoher räumlicher Auflösung untersucht werden kann. Ein derartiges Verfahren beschreiben beispielsweise C. Harrison et al. in "Layer by layer imaging of diblock copolymer films with a scanning electron microscope", *Polymer,* Vol. 30, No. 13, pp. 2733-2744, 1998.
Allen genannten Verfahren ist gemein, daß das Probenvolumen in eine Folge ebener Schichten aufgeteilt wird und von jeder Schicht eine ebene 2-dimensionale Karte der interessierenden Eigenschaft erstellt wird. Bei der Methode der Serienschnitte ist die Tiefenauflösung durch die Dicke der Dünnschnitte begrenzt und beträgt einige zig Nanometer. Zudem können von vielen Materialien keine Serienschnitte erzeugt werden. Bei den schichtabtragenden Methoden ist die Tiefenauflösung in sehr vielen Fällen durch die ungleichmäßige Abtragrate und die dadurch verursachte Rauhigkeit der Probenoberfläche stark eingeschränkt.

Gegenstand der Erfindung ist eine neuartige Vorrichtung zur Ermittiung der räumlichen Verteilung von Eigenschaften einer insbesondere heterogenen Probe und ein Verfahren, welches es erlaubt, mittels der erfindungsgemäßen Vorrichtung die räumliche Verteilung von Eigenschaften einer zu untersuchenden Probe in allen drei Raumrichtungen mit bis zu atomarer Auflösung aufzuklären. Die mikroskopische Untersuchung erfolgt direkt im Ortsraum, ein Umweg über Streumethoden ist nicht erforderlich, dementsprechend können insbesondere Proben untersucht werden, die keine regelmäßige innere Struktur aufweisen.

Die erfindungsgemäße Vorrichtung beruht auf einer neuartigen Kombination aus einem Mikroskop zur dreidimensionalen Erfassung der Topographie zₙ(x,y) der Oberfläche n einer Probe, einer Sonde, welche eine oder mehrere Eigenschaften Pⱼ (j=1,...,m) der Probe ortsaufgelöst auf der Topographie zₙ(x,y) der Oberfläche n erfaßt, einer Abtragvorrichtung, beispielsweise einer Vorrichtung zum Plasmaätzen, zum Ätzen mit reaktiven Gasen oder Flüssigkeiten, oder zum chemomechanischen Polieren, welche eine Steuerung aufweist und mittels welcher in einem Abtragvorgang A_{n,n+1} eine Schicht von der Oberfläche n der Probe abgetragen werden kann, und einer computergestützen Bildverarbeitungsvorrichtung, welche dazu ausgerüstet ist, aus einer vom Mikroskop ermittelten Folge von Oberflächentopographien zₙ(x,y) bis zₙ₊ₘ(x,y) und den auf diesen Topographien erfaßten Eigenschaften Pⱼ(zₙ(x,y)) bis Pⱼ(zₙ₊ₘ(x,y)) ein dreidimensionales Abbild der räumlichen Verteilung der Eigenschaften Pⱼ in der Probe zu erzeugen.

Das erfindungsgemäße Verfahren beruht auf einer neuartigen Kombination von Mikroskopieverfahren, insbesondere Rastersondenmikroskopieverfahren, die eine sehr hohe laterale Auflösung erreichen, mit geeigneten Abtragverfahren, die global oder lokal auf die Probe einwirken, und eine gezielte Abtragung von Schichten von der Probenoberfläche erlauben, wobei die abgetragene Schichtdicke im atomaren Bereich oder deutlich darüber liegen kann. Die räumliche Struktur einer zu untersuchenden Probe wird mit Hilfe einer Sequenz von einzelnen Schritten untersucht. Die Topographie zₙ(x,y) der Oberfläche n der zu untersuchenden Probe wird mit Hilfe von Rastersondenmikroskopieverfahren mit sehr hoher räumlicher Auflösung bestimmt. Zusätzlich werden die interessierenden Eigenschaften Pⱼ der Probe mittels einer Sonde lokal auf der Oberfläche n mit bekannter Topographie zₙ(x,y) erfaßt. Beispiele solcher Eigenschaften sind Härte, Elastizität, Reibungskoeffizient, Leitfähigkeit. Magnetisierung oder Elektronendichte, die oftmals gleichzeitig mit der Bestimmung der Topographie erfaßt werden können, insbesondere bei Verwendung eines Rastersondenmikroskopieverfahrens. Aus der Topographie zₙ(x,y) der Oberflächen n und den darauf lokal erfaßten Eigenschaften Pⱼ(x,y) wird eine dreidimensionale Karte Sₙ der Oberfläche n erstellt und auf dieser die lokal ermittelten Eigenschaften der Probe verzeichnet. Die Karte Sₙ gibt demnach die Topographie zₙ(x,y) mit den darauf verzeichneten Eigenschaften Pⱼ(x,y) wieder, repräsentiert also Pⱼ(zₙ).

Insbesondere ist zu bemerken, daß die Oberfläche n der Probe nicht als ebene Fläche angenommen wird, sondern der erstellten dreidimensionalen Karte Sₙ die tatsächliche Topographie zₙ(x,y) zugrundegelegt wird. Daher wird jede einzelne Karte Sₙ im allgemeinen eine gekrümmte Fläche im Ortsraum darstellen.

Danach wird mittels eines geeigneten Abtragverfahrens global oder lokal eine Schicht von der Oberfläche der Probe abgetragen. Als Abtragverfahren stehen in Abhängigkeit von der zu untersuchenden Probe beispielsweise das Ätzen mit reaktiven Gasen und Flüssigkeiten. Ätzen mit Ionen (Plasmaätzen) oder chemomechanisches Polieren zur Verfügung. Die so entstandene neue Oberfläche n+1 der zu untersuchenden Probe wird wiederum mit Hilfe von Rastersondenmikroskopieverfahren charakterisiert, d.h. ihre Topographie ermittelt und auf dieser die interessierenden Eigenschaften der Probe mittels einer Sonde lokal erfaßt. Aus der Topographie zₙ₊₁(x,y) der Oberfläche n+1 und den darauf lokal erfaßten Eigenschaften Pⱼ wird wiederum eine dreidimensionale Karte Sₙ₊₁ der im Abtragvorgang A_{n,n+1} entstandenen Oberfläche n+1 erstellt und auf dieser die lokal ermittelten Eigenschaften Pⱼ der Probe verzeichnet, d.h. es entsteht eine neue dreidimensionale Karte Sₙ₊₁ der lokalen Eigenschaften Pⱼ der Probe.

Ein Bild der räumlichen Verteilung der Eigenschaften Pⱼ in der Probe entsteht aus der sukzessiven Abtragung weiterer Schichten und der nachfolgenden Charakterisierung der entstandenen Oberflächen. Aus dem "Stapel" der daraus gewonnen Karten Sₖ, die die jeweiligen Oberflächen k nach jedem Abtragvorgang mit ortsaufgelöst erfaßten Eigenschaften Pⱼ der Probe darstellen, läßt sich ein dreidimensionales Bild der untersuchten Eigenschaften der Probe erstellen. Durch eine Sequenz aufeinanderfolgender Abtrag- und Charakterierungsschritte ist es somit möglich, die räumliche Struktur, insbesondere die räumliche Verteilung der Eigenschaften Pⱼ in der zu untersuchenden Probe schrittweise aufzuklären.

Die laterale Auflösung (in der x-y-Ebene), die dabei erreicht wird, ist durch die laterale Auflösung der eingesetzten Mikroskopie- insbesondere Rastersondenmikroskopieverfahren beschränkt, d.h., sie kann im atomaren Bereich liegen. Zusätzlich zur ortsaufgelösten Erfassung der interessierenden Eigenschaften wird die Topographie der entstandenen neuen Oberfläche bestimmt, wobei die Auflösung in z-Richtung hierbei nur durch die Auflösung in z-Richtung des Mikroskopie-, insbesondere Rastersondenmikroskopieverfahren beschränkt ist und daher auch in dieser Richtung ohne weiteres atomare Auflösung erreichen kann.

Die Tiefenauflösung des erfindungsgemäßen Mikroskopieverfahrens ist demnach im wesentlichen durch den mittleren Abstand a_{k,k+1} aufeinanderfolgender Oberflächen bestimmt, die bei den einzelnen Abtragvorgängen A_{k,k+1} freigelegt und mittels Rastersondenmikroskopieverfahren charakterisiert werden.

Je nach Art der zu untersuchenden Probe stehen eine Vielzahl verschiedener Abtragverfahren zur Verfügung, die eine kontrollierte Abtragung von Schichten mit Dicken im Bereich von vielen Nanometern bis zu Bruchteilen von Nanometern ermöglichen. Demzufolge erlaubt eine erfindungsgemäße Kombination von Mikroskopieverfahren zur dreidimensionalen Erfassung der Topographie von Probenoberflächen, insbesondere Rastersondenmikroskopieverfahren mit derartigen Abtragverfahren sowohl eine laterale als auch eine Tiefenauflösung, die im atomaren Bereich (d.h. im Bereich von 100 Picometern) liegen kann.

Am anderen Ende der Skala können mittels geeigneter Mikroskopieverfahren auch Strukturen oder Verteilungen von Eigenschaften Pⱼ in einer Probe auf einer Größenskala von Mikrometern und darüber untersucht werden. Insbesondere bieten sich hier optische Mikroskopieverfahren und speziell dafür ausgelegte Rastersondenmikroskopieverfahren an.

Im Gegensatz zu den im Stand der Technik erwähnten und bekannten schichtabtragenden Mikroskopieverfahren ist die Tiefenauflösung (in z-Richtung) des erfindungsgemäßen Verfahrens nicht durch die Rauhigkeit r der Probenoberfläche begrenzt. Die Tiefenauflösung des erfindungsgemäßen Verfahren ist sogar völlig unabhängig von der Rauhigkeit der Probenoberfläche und ist damit nicht auf die Anwendung auf im wesentlichen ebener, glatter Oberflächen beschränkt, wie dies für die vorbekannten Methoden der Fall ist.

Die gängige Lehrmeinung geht von der Existenz im wesentlichen ebener, glatter Oberflächen als Grundvoraussetzung zur Erzielung einer hohen Tiefenauflösung aus. Im Gegensatz zur gängigen Lehrmeinung kann jedoch bei der Verwendung des erfindungsgemäßen Verfahrens auch auf sehr unebenen Oberflächen eine Tiefenauflösung im Bereich von sub-Nanometern über die gesamte zu untersuchende Tiefe der Probe erzielt werden. Im völligen Gegensatz zur gängigen Lehrmeinung können mit dem erfindungsgemäßen Verfahren auch einzelne Objekte, die eine relativ stark gekrümmte Oberfläche aufweisen, mit hoher räumlicher Auflösung in allen drei Raumrichtungen untersucht werden.

Die Anwendbarkeit des erfindungsgemäßen Verfahrens auch auf sehr unebenen Oberflächen bedeutet insbesondere, daß das Verfahren auf stark heterogene Proben angewendet werden kann, bei denen aufgrund der Heterogenität der Probe starke lokale Schwankungen in der abgetragenen Materialmenge auftreten können. Ebenso kann es auf Proben angewendet werden, für die kein Verfahren zum gleichmäßigen Abtragen bekannt ist. Derartige Proben waren lt. gängiger Lehrmeinung nicht mit hoher Tiefenauflösung mittels sukzessiver Abtragung und nachfolgender Oberflächencharakterisierung zu untersuchen, sind jedoch dem erfindungsgemäßen Verfahren uneingeschränkt auch mit hoher Tiefenauflösung zugänglich.

Ein weiterer Vorteil ist, daß aus den ermittelten Daten eine lokale Abtragrate des Materials bestimmt werden kann. Diese Abtragrate wird im allgemeinen materialspezifisch sein. Sie kann demnach als neuartiger Kontrastmechanismus bei der Erstellung zwei- oder dreidimensionaler Abbilder der Probe verwendet werden, der insbesondere eine Unterscheidung zwischen verschiedenen Materialien in der Probe erlaubt.

Weiterhin ist die erfindungsgemäße Vorrichtung und das erfindungsgemäße Verfahren einer vollständigen Automatisierung zugänglich. Für die vollautomatische Charakterisierung einer Oberfläche mittels Mikroskopieverfahren, insbesondere Rastersondenmikroskopieverfahren stehen eine Vielzahl kommerzieller Geräte zur Verfügung. Die automatische Abtragung von Schichten von der Oberfläche einer Probe mittels Abtragverfahren ist ebenfalls Stand der Technik. Viele Methoden der Rastersondenmikroskopie erreichen eine mit der Rasterelektronenmikroskopie vergleichbare und sogar bessere laterale Auflösung. Daher können mit dem erfindungsgemäßen Verfahren Proben, die bisher nur mit großem Aufwand mit der Methode der Sericnschnitte und Elektronenmikroskopie mit hoher räumlicher Auflösung untersucht werden konnten, mit einer vergleichbaren und in vielen Fällen auch besseren räumlichen Auflösung untersucht werden.

Eine vollständige Automatisierung der erfindungsgemäßen Vorrichtung und des erfindungsgemäßen Verfahrens ermöglicht es, die dreidimensionale Struktur und Eigenschaften einer Probe mit deutlich geringerem Personalaufwand und damit wesentlich kostengünstiger zu ermitteln als bisher, was es einer breiten industriellen Anwendung zugänglich macht.

Die Tatsache, daß im Gegensatz zur Rasterelektronenmikroskopie oder dynamischen SIMS viele Methoden der Mikroskopie, insbesondere der Rastersondenmikroskopie kein Vakuum erfordern, trägt dazu bei, daß das erfindungsgemäße Verfahren deutlich kostengünstiger ist als bekannte, im Ortsraum arbeitende Verfahren zur Untersuchung von Proben mit unregelmäßiger räumlicher Struktur und hoher räumlicher Auflösung.

Vor allem jedoch ermöglicht die erfindungsgemäße Vorrichtung und das erfindungsgemäße Verfahren die dreidimensionale räumliche Erfassung von Eigenschaften einer Probe mit einer hohen räumlichen Auflösung in allen drei Raumrichtungen, die mit den bisher bekannten Methoden der Rastersondenmikroskopie bisher nur an der Probenoberfläche mit hoher lateraler Auflösung erfaßt werden konnten. Damit erweitert es diese Methoden der Rastersondenmikroskopie um die dritte Raumrichtung unter Beibehaltung der hohen räumlichen Auflösung der Rastersondenmikroskopie. Viele dieser Eigenschaften, wie z.B. die Härte, die Elastizität, die Magnetisierung, die Leitfähigkeit, waren bisher entweder überhaupt nicht oder nur mit einer deutlich schlechteren Auflösung räumlich erfaßbar und erst das erfindungsgemäße Verfahren macht sie einer räumlichen Erfassung mit hoher räumlichen Auflösung zugänglich.

Anwendbar ist die erfindungsgemäße Vorrichtung und das erfindungsgemäße Verfahren zur dreidimensionalen Erfassung von interessierenden Eigenschaften einer Probe in vielen Bereichen in Wissenschaft und Technik. Beispielhaft seien genannt:
- Ermittlung des Materialgefüges von Legierungen aller Art (metallische, keramische oder polymere Werkstoffe) und von Verbundwerkstoffen.
- Materialprüfung, insbesondere Identifikation und Vermessung von Rissen und anderen Defekten.
- Untersuchung der dreidimensionalen räumlichen Struktur von selbstorganisierten Makromolekülen.
- Räumliche Erfassung der Ladungsträger- und Dotierungskonzentrationen in Halbleitern und Halbleiterbauelementen mit bisher nicht erreichbarer räumlicher Auflösung. Prinzipiell kann die Position einzelner Dotieratome im Halbeiter mit atomarer Genauigkeit erfaßt werden.
- Untersuchung der räumlichen Struktur von Halbleiterbauelementen. die im allgemeinen aus einer komplizierten räumlichen Anordnung verschiedenartiger Materialien auf kleinstem Raum bestehen.
- Untersuchung biologischer Proben, z.B. Ultrastmkturen von Zellen. Viren etc. Hierbei kann u.U. auf eine Anfärbung verzichtet werden und es können Eigenschaften der Proben untersucht werden, die bisher nicht räumlich erfaßt werden konnten.

Weitere Merkmale und Vorteile finden sich in den Unteransprüchen sowie der nun folgenden, nicht einschränkend zu verstehenden Beschreibung von Ausführungsbeispielen, die unter Bezugnahme auf die Zeichnung näher erläutert werden. In dieser zeigen:
- Fig. 1:: eine schematische Darstellung einer erfindungsgemäßen Vorrichtung,
- Fig. 2:: eine Darstellung der geometrischen Verhältnisse bei Anwendung des erfindungsgemäßen Verfahrens auf eine Probe,
- Fig. 3:: eine schematische Darstellung einer weiteren erfindungsgemäßen Vorrichtung,
- Fig. 4:: eine Darstellung zweier aufeinanderfolgender Oberflächen n und m,
- Fig. 5:: eine Darstellung der geometrischen Verhältnisse bei Verwendung eines Markers zur Bestimmung der absoluten Oberflächenpositionen der Probe, und
- Fig. 6:: eine weitere Darstellung der geometrischen Verhältnisse bei Anwendung des erfindungsgemäßen Verfahrens auf eine Probe,

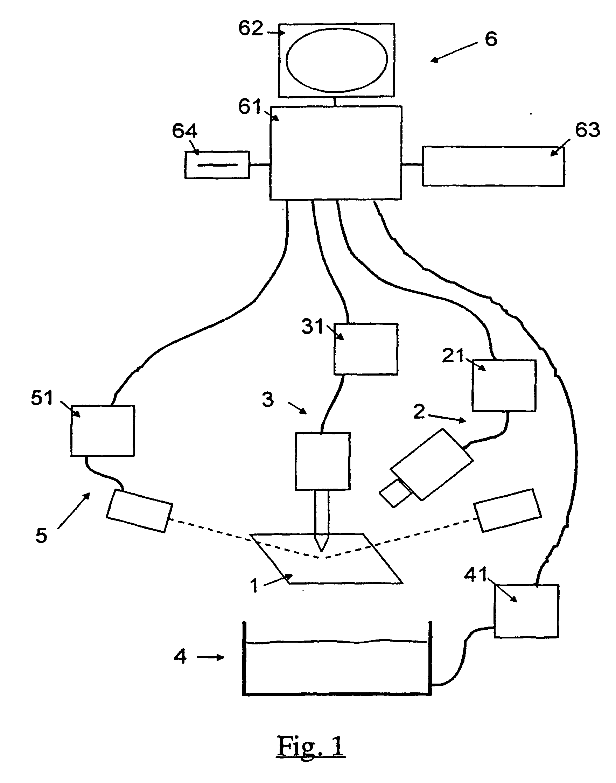

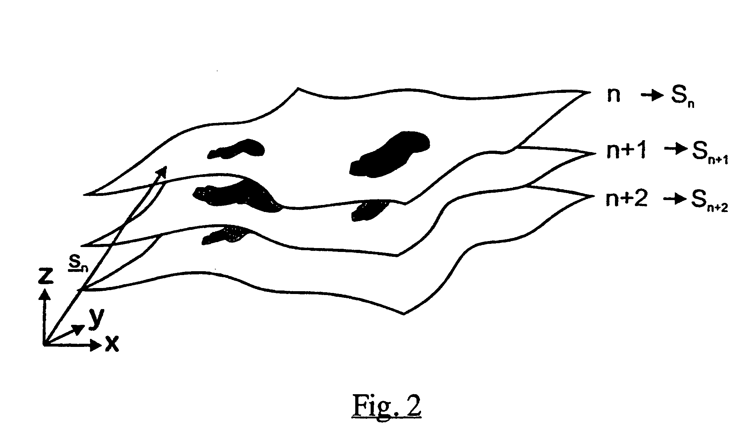

Figur 1 zeigt schematisch den Aufbau einer erfindungsgemäßen Vorrichtung. Die Topographie zₙ(x,y) der Oberfläche n (siehe Fig. 2) einer Probe 1 wird mittels eines Mikroskops 2 ermittelt. welches eine Steuerung 21 aufweist. Die Topographie zₙ(x,y) ergibt sich insbesondere als z-Komponente des in Fig. 2 gezeigten Vektors sₙ(x,y,z). Die Steuerung 21 stellt die Topographie zₙ(x,y) der Oberfläche n zur Weiterverarbeitung zur Verfügung, insbesondere speichert die Steuerung 21 die Topographie zₙ(x,y).

Beispielsweise sind spezielle optische Mikroskope 2 zur Erfassung der Topographie zₙ(x,y) geeignet. Die Verwendung eines optischen Phaseninterferenzmikroskops als Mikroskop 2 ermöglicht eine laterale (x-y-Ebene) Auflösung im Bereich der verwendeten Wellenlänge, in z-Richtung ist eine Auflösung im Bereich von Nanometern oder besser möglich. Die Verwendung eines konfokalen Laserscanning-Mikroskops kann die laterale Auflösung erhöhen, die Auflösung in z-Richtung jedoch verringern. Mittels optischer Mikroskope können auch größerskalige Strukturcn im Bereich vieler Mikrometer bis Millimeter erfaßt werden.

Weiterhin sind eine Vielzahl von Rastersondenmikroskopen zur Erfassung der Topographie zₙ(x,y) der Probenoberfläche n einsetzbar. Je nach Probe 1 (insbesondere Probeneigenschaften wie Transparenz, Magnetisierung, Leitfähigkeit etc.) und gewünschtem Auflösungsvermögen sind beispielsweise die Methoden STM ("scanning tunneling microscope": Rastertunnelmikroskop), AFM ("atomic force microscope": Kraftmikroskop, auch Reibungskraftmikroskop), SNOM ("scanning nearfield optical microscope": optisches Nahfeldmikroskop) oder SMNM ("scanning magnetic nearfield microscope": magnetisches Nahfeldmikroskop) sowie viele von diesen und anderen Rastersondenmikroskopen abgeleitete Varianten von Rastersondenmikroskopen. Je nach verwendetem Mikroskoptyp können mit Rastersondenmikroskopen Strukturen zwischen vielen Mikrometern und einigen zig Picometem erfaßt werden. Allen diesen Rastersondenmikroskopen ist gemein, daß sie die Topographie zₙ(x,y) der Probenoberfläche erfassen und für eine Weiterverarbeitung zur Verfügung stellen, insbesondere speichern.

Eine Sonde 3 erfaßt lokal eine oder mehrere Eigenschaften Pⱼ auf der Oberfläche n. Die Sonde 3 weist eine Steuerung 31 auf, welche die erfaßten Eigenschaften Pⱼ(zₙ(x,y)) zur Weiterverarbeitung zur Verfügung stellt, insbesondere speichert. Als Sonde 3 kann beispielsweise hochauflösende SIMS ("secondary ion mass spectroscopy": Sekundärionenmassenspektroskopie) verwendet werden.

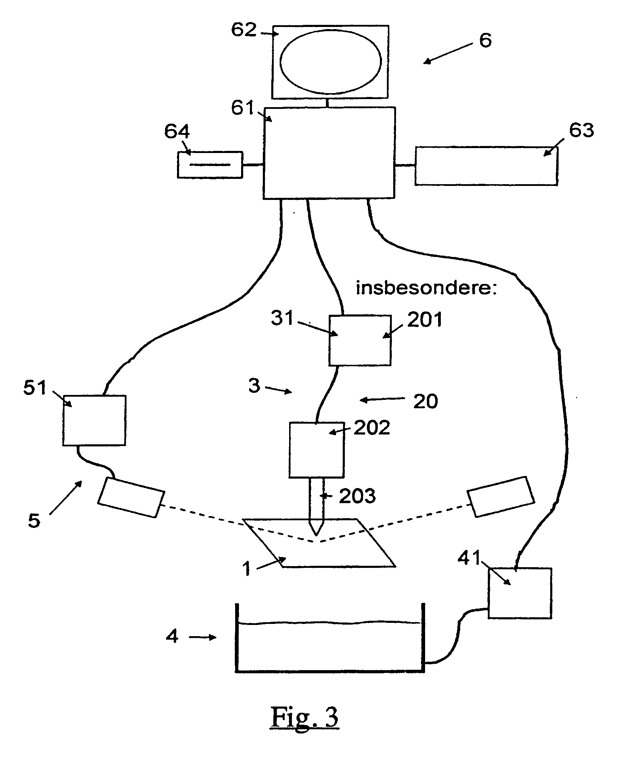

Daneben können eine Vielzahl von Rastersondenmikroskopen 20 als Sonden 3 verwendet werden (siehe insbesondere Figur 3). Beispielsweise kann mittels eines STM die lokale Elektronendichte, mittels eines AFM der Reibungskoeffizient (Reibungskraftmikroskop) oder Materialunterschiede ("TappingMode™" Kraftmikroskop), mittels eines SNOM lokale optische Eigenschaften wic Dielektrizitätskonstante oder mittels eines SMNM lokale magnetische Eigenschaften wie Magnetisierung oder magnetische Suszeptibilität erfaßt werden. Die Verwendung eines Rastersondenmikroskops 20 bietet den Vorteil, daß die Topographie zₙ(x,y) der Oberfläche n und die Eigenschaften Pⱼ(zₙ(x,y)) darauf mittels nur einer Vorrichtung und oftmals auch gleichzeitig oder in einem Schritt erfaßt werden können. Als Sondensteuerung 31 kann in diesem Fall insbesondere die Steuerung 201 des Rastersondenmikroskops 20 selbst dienen.

Auf die Sonde 3 kann in einer weiteren vorteilhaften Ausgestaltung der erfindungsgemäßen Vorrichtung verzichtet werden, bei der die erfindungsgemäße Vorrichtung zur Ermittlung der räumlichen Verteilung eines Parameters verwendet werden soll, der eine Abtragrate einer insbesondere heterogenen Probe charakterisiert.

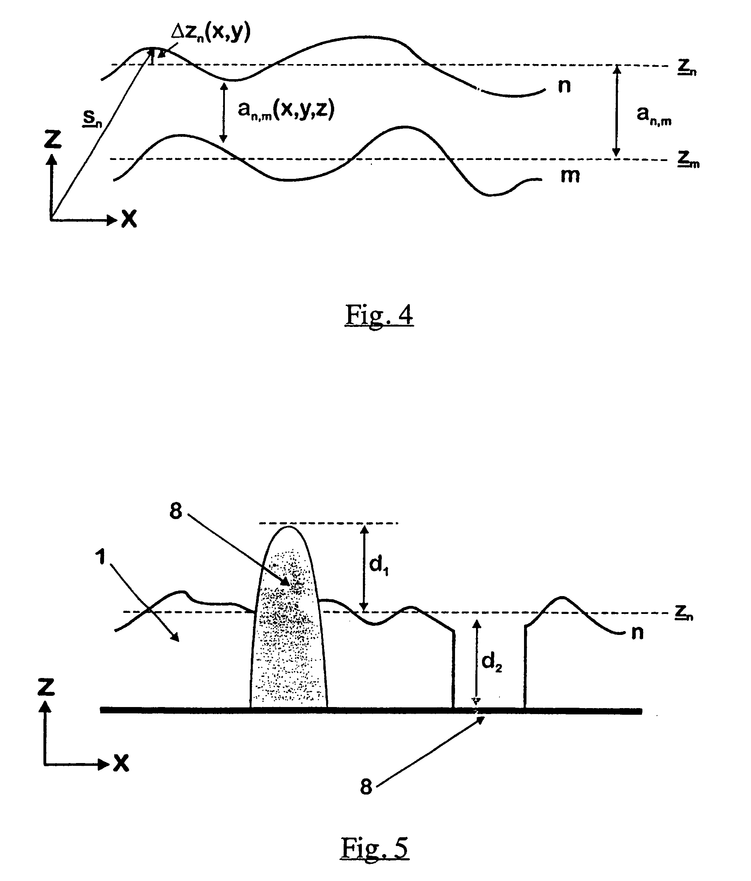

Eine Abtragvorrichtung 4, welche eine Steuerung 41 aufweist, ermöglicht es, in einem Abtragvorgang A_{n,n+1} eine Schicht der mittleren Dicke a_{n,n+1} von der Oberfläche n der Probe 1 abzutragen (siehe Fig. 4). Beispielsweise kann diese Abtragung mittels einer Vorrichtung zum Plasmaätzen, einer Vorrichtung zum Ätzen mit reaktiven Gasen oder Flüssigkeiten oder einer Vorrichtung zum chemomechanischen Polieren erfolgen. Durch Kontrolle der jeweiligen Prozeßparameter ist es insbesondere möglich, gezielt Schichten vorbestimmter mittlerer Dicke a_{n,n+1} abzutragen. Dabei ist eine global abgetragene Schichtdicke gemeint, d.h. die lokal abgetragene Schichtdicke wird über eine bestimmte Fläche der Probenoberfläche n oder auch über die gesamte Probenoberfläche n gemittelt. Die Steuerung 41 stellt die Prozeßparameter des Abtragvorgangs, insbesondere die abgetragene mittlere Schichtdicke a_{n,n+1} (falls zugänglich) zur Weiterverarbeitung zur Verfügung, insbesondere speichert sie diese.

Die Abtragvorrichtung 4 kann entweder so ausgebildet sein, daß ein Abtragvorgang im wesentlichen auf der gesamten Oberfläche n wirksam ist (z.B. bei einem naßchemischen Ätzverfahren), oder nur in der unmittelbaren Umgebung der Sonde 3 wirksam ist. Unter unmittelbarer Umgebung der Sonde ist insbesondere ein Fläche mit einem Durchmesser von wenigen Radien der Fläche M_{S}, über die die Sonde 3 die Probeneigenschaften Pⱼ gemittelt erfaßt, zu verstehen. Eine lokal wirksame Abtragvorrichtung 4 ist beispielsweise ein STM. welches mit solchen Parametern und in einer solchen Umgebung betrieben wird, daß in der Umgebung der Spitze (also der Sonde 3) elektrochemische Reaktionen, insbesondere elektrochemisches Ätzen auftritt.

Die bei einem Abtragschritt A_{n,n+1} abgetragene mittlere Schichtdicke a_{n,n+1} (siehe Fig. 4) kann mittels einer Vorrichtung zur Schichtdickenmessung 5, welche eine Steuerung 51 aufweist, erfaßt werden. Als derartige Vorrichtung kann je nach Probenbeschaffenheit beispielsweise ein Ellipsometer oder ein Röntgenreflexionsmeßgerät verwendet werden. Möglich ist auch ein Wägen der Probe vor und nach einem Abtragschritt A_{n,n+1} und eine Bestimmung der abgetragenen Schichtdicke a_{n,n+1} aus der abgetragenen Materialmenge (Masse). Wird elektrochemisches Ätzen zum Abtragen verwendet, kann die abgetragene Materialmenge und damit die mittlere Dicke der abgetragenen Schicht aus der während einem Abtagschritt geflossenen elektrischen Ladung Q ermittelt werden. Die Steuerung 51 der Vorrichtung zur Schichtdickenmessung 5 stellt die abgetragene mittlere Schichtdicke a_{n,n+1} zur Weiterverarbeitung zur Verfügung, insbesondere speichert sie diese.

Eine computergestützte Bildverarbeitung 6, welche beispielsweise aus einem leistungsfähigen PC oder einer Workstation bestehen und insbesondere eine Steuerung 61, einen Bildschirm 62, einen Drucker 63 und ein Speichermedium 64 aufweisen kann, ist dazu eingerichtet, aus einer vom Mikroskop 2 ermittelten Folge von Oberflächentopographien zₙ(x,y) bis zₙ₊ₘ(x,y) und den von der Sonde 3 aus der auf diesen Topographien erfaßten Eigenschaften Pⱼ(zₙ(x,y)) bis Pⱼ(zₙ₊ₘ(x,y)) sowie gegebenenfalls aus den Prozeßparametern der Abtragvorgänge A_{n+i,n+i+1,} welche von der Steuerung 41 der Abtragvorrichtung 4 erfaßt wurden und den jeweils abgetragenen mittleren Schichtdicken a_{n+i,n+i+1,} welche beispielsweise ebenfalls von der Steuerung 41 der Abtragvorrichtung 4 oder von der Steuerung 51 der Vorrichtung zur Schichtdickenmessung 5 erfaßt wurden, ein dreidimensionales Abbild der Probe 1 zu erzeugen. Insbesondere kann dieses Abbild auf einem Bildschirm 62 angezeigt, auf einem Drucker 63 ausgegeben oder auf einem Speichermedium 64 gespeichert werden.

In einer vorteilhaften Weiterbildung der erfindungsgemäßen Vorrichtung ist die Steuerung 61 der computergestützten Bildverarbeitungsvorrichtung 6 in die Steuerung 21 oder 201 des Mikroskops (2), insbesondere des Rastersondenmikroskops 20 integriert.

In einer weiteren vorteilhaften Weiterbildung der erfindungsgemäßen Vorrichtung ist die Steuerung 41 der Abtragvorrichtung 4 in die Steuerung 21 oder 201 des Mikroskops 2. insbesondere des Rastersondenmikroskops 20 integriert.

In einer weiteren vorteilhaften Weiterbildung der erfindungsgemäßen Vorrichtung sind die Steuerung 21 des Mikroskops 2, insbesondere die Steuerung 201 des Rastersondenmikroskops 20, sowie die Steuerung 31 der Sonde 3, die Steuerung 41 der Abtragvorrichtung 4, die Steuerung 51 der Meßvorrichtung 5 zur Bestimmung der bei einem Abtragvorgang A_{k,k+1} abgetragene mittlere Schichtdicke a_{k,k+1} und die Steuerung 61 der Bildverarbeitungsvorrichtung 6 oder eine Teilmenge dieser Steuerungen mit einer zentralen Steuerung verbunden. insbesondere in eine zentrale Steuerung integriert.

Die erfindungsgemäße Vorrichtung kann mittels eines erfindungsgemäßen Verfahrens zur Ermittlung der räumlichen Verteilung von Eigenschaften Pⱼ einer Probe 1 verwendet werden. Dieses Verfahren umfaßt die folgenden Verfahrensschritte:
a) eine Aufnahme der Topographie zₙ(x,y) der Oberfläche n einer Probe 1, welche sich im wesentlichen in einer zur x-y-Ebene parallelen Ebene bei z = zₙ erstreckt, mittels eines Mikroskops 2, insbesondere mittels eines Rastersondenmikroskops 20 und einer oder mehrerer Eigenschaften Pⱼ(zₙ(x,y)) darauf mittels einer Sonde 3 , insbesondere mittels eines Rastersondenmikroskops 20,
b) einer Abtragung einer Schicht von der Oberfläche n der Probe 1 im wesentlichen in z-Richtung mittels einer Abtragvorrichtung 4 in einem Abtragvorgang A_{n,n+1}, wobei eine neue Oberfläche n+1 freigelegt wird,
c) eine m-fache Wiederholung der Schritte a) und b) unter Charakterisierung der jeweilig freigelegten Probenoberfläche n+i, i = 1,...,m und Abtragung einer weiteren Schicht von der Oberfläche n+i der Probe 1 in einem Abtragvorgang A_{n+i,n+i+1,} wobei die Zahl m durch die Größe des zu charakterisierenden Bereichs der Probe und die gewünschte Tiefenauflösung bestimmt ist, insbesondere m zwischen 10 und 1000 liegt, und
d) einer Erzeugung eines dreidimensionalen Abbilds der Eigenschaften Pⱼ der Probe 1 aus den Oberflächentopographien zₙ(x,y) bis zₙ₊ₘ(x,y) und den Eigenschaften Pⱼ(zₙ(x,y)) bis Pⱼ(zₙ₊ₘ(x,y)) mittels einer computergestützten Bildverarbeitungsvorrichtung 6

In einer vorteilhaften Weiterbildung des vorgenannten Verfahrens werden nur die Topographien zₙ₊ᵢ(x,y) und zₙ₊ᵢ₊₁(x,y) aufeinanderfolgender Oberflächen n+i und n+i+1 erfaßt und aus diesen die räumliche Verteilung eines die lokale Abtragrate einer Probe 1 charakterisierenden Parameters in der Probe 1 ermittelt. Dieses weitergebildete Verfahren umfaßt die folgenden Verfahrensschritte:
a) eine Aufnahme der Topographie zₙ(x,y) der Oberfläche n einer Probe 1, welche sich im wesentlichen in einer zur x-y-Ebene parallelen Ebene bei z = zₙ erstreckt mittels eines Mikroskops 2, insbesondere mittels eines Rastersondenmikroskops 20,
b) eine Abtragung einer Schicht von der Oberfläche n der Probe 1 im wesentlichen in z-Richtung in einem Abtragvorgang A_{n,n+1} mittels einer Abtragvorrichtung 4 ,wobei eine neue Oberfläche n+1 freigelegt wird,
c) eine m-fache Wiederholung der Schritte a) und b) unter Charakterisierung der jeweiligen Probenoberfläche n+i, i = 1,...,m und Abtragung einer weiteren Schicht von der Oberfläche der Probe 1 in einem Abtragvorgang A_{n+i,n+i+1,} wobei die Zahl m durch die Größe des zu charakterisierenden Bereichs der Probe und die gewünschte Tiefenauflösung bestimmt ist, vorzugsweise m zwischen 5 und 1000 liegt, insbesondere m zwischen 10 und 500 liegt,
d) einer Bestimmung der bei der bei den Abtragvorgängen A_{n+1,n+i+1} lokal abgetragenen Schichtdicken a_{n+i,n+i+1}(x,y,z) (siehe Fig. 4), und
e) einer Erzeugung eines dreidimensionalen Abbilds der lokal abgetragenen Schichtdicken a_{n+i,n+i+1}(x,y,z) oder eines davon abgeleiteten, eine lokale Abtragrate der Probe charakterisierenden Parameters mittels einer computergestützten Bildverarbeitungsvorrichtung 6.

Der Schritt d) des vorstehenden Verfahrens kann insbesondere durch folgendes Verfahren realisiert werden: Die lokale absolute z-Position zₙ einer Oberfläche n wird bestimmt aus einer über geignete Bereiche gemittelten mittleren Lage zₙ dieser Oberfläche und der mittels eines Mikroskops 2, insbesondere mittels eines Rastersondenmikroskops 20 ermittelten lokalen Abweichung Δzn von der mittleren Lage zn (siehe Fig.4).

Die mittlere Lage zₘ einer Oberfläche m, wie sie in Figur 4 gezeigt ist, kann beispielsweise ermittelt werden aus der über geeignete Bereiche gemittelten mittleren Lage zₙ der Oberfläche n und der in den dazwischenliegenden Abtragvorgängen A_{n, n+1} bis A_{m-1, m} abgetragenen summierten Schichtdicken a_{n,n+1} bis a_{m-1,m,} welche mittels einer Meßvorrichtung 5 zur Bestimmung der abgetragenen mittleren Schichtdicke a_{k-1, k} bestimmt wird.

Aus der Kombination beider vorstehender Verfahrensschritte sind die lokalen absoluten z-Positionen zₙ und zₘ zweier aufeinanderfolgender Oberflächen n und m bestimmt, woraus die im Abtragvorgang A_{k,k+1} lokal abgetragene Schichtdicke a_{k,k+1}(x,y,z) bestimmt werden kann.

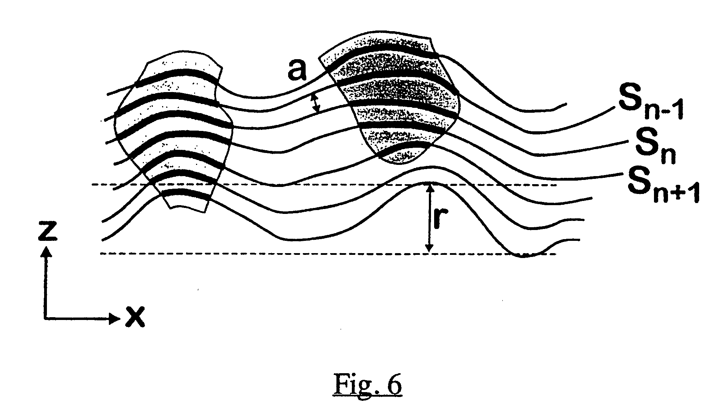

Alternativ zu diesem Verfahren ist eine Bestimmung der lokalen absoluten z-Position sowie der über geeignete Bereiche gemittelten mittleren Lage zₙ einer Oberfläche n einer Probe 1 möglich durch Festlegung einer oder mehrerer Referenzmarke(n) mittels eines oder mehrerer Markern 8, die sich, insbesondere ihre Abmessungen, bei einem Abtragschritt nicht oder nur unwesentlich ändert. Alle lokalen absoluten z-Positionen können dann in Bezug auf die Referenzmarken gemessen werden. Insbesondere kann zur Bestimmung der mittleren Lage zₙ einer Oberfläche n der Abstand d_{M} in z-Richtung zu in der Probe vorhandenen oder zu diesem Zweck beigefügten Objekten (Marker) 7 verwendet werden, z.B. Gräben, Kugeln, Probenträger etc., deren räumliche Abmessungen und Positionen vor dem Abtragen der Oberfläche n bekannt sind und die sich während des Abtragverfahrens nicht oder in bekannter Weise verändern. Dies ist in Figur 5 gezeigt.

In einer vorteilhaften Weiterbildung obenstehender Verfahren wird die relative laterale Position in x- und y-Richtung zweier benachbarter Oberflächen n und n+1 oder von Teilbereichen zweier benachbarter Oberflächen n und n+1 bestimmt anhand der Position in x- und y- Richtung einer oder mehrerer größerskaliger Strukturen oder eines oder mehrerer größerskaliger Objekte (Marker) 8, wobei diese größerskaligen Strukturen oder diese größerskaligen Objekte 8 in der Probe 1 naturgemäß vorhanden sind oder zu diesem Zweck beigefügt wurden und deren räumliche Abmessungen und Positionen vor dem Abtragen der Oberfläche n bekannt sind und diese sich während des Abtragverfahrens nicht oder in bekannter Weise verändern.

Die vorgenannten Verfahren zur Bestimmung der lokalen absoluten z-Position zₖ einer Oberfläche sind insbesondere vorteilhaft, wenn die Probe 1 für die Abtragvorgänge A_{n,n+1} aus ihrer betriebsgemäßen Position im Mikroskop 2, insbesondere Rastersondenmikroskop 20 entnommen werden muß.

Die Abtragvorgänge A_{n,n+1} werden mittels einer Abtragvorrichtung 4 ausgeführt. Für die Abtragvorgänge A_{n,n+1} wird die Probe aus ihrer betriebsgemäßen Position im Mikroskop 2, insbesondere Rastersondenmikroskop 20 entnommen und in eine betriebsgemäße Position in der Abtragvorrichtung 4 eingesetzt. Nach erfolgtem Abtragvorgang A_{n,n+1} wird die Probe aus der Abtragvorrichtung entnommen und wieder in die betriebsgemäße Position im Mikroskop 2, insbesondere Rastersondenmikroskop 20 eingesetzt.

Die Abtragvorgänge A_{n,n+1}können global auf die gesamte Oberfläche der Probe 1 einwirken. Dies ist im allgemeinen bei den erwähnten Abtragverfahren: Ätzen mit reaktiven Gasen oder Flüssigkeiten, Plasmaätzen oder chemomechanischem Polieren der Fall.

In manchen Fällen kann eine lokale Abtragung einzelner Schichten von der Probenoberfläche erforderlich oder vorteilhaft sein. In diesem Fall können Abtragverfahren eingesetzt werden, die lokal, insbesondere in der direkten Umgebung einer Sonde 3 wirksam sind. Als Beispiel hierfür ist das elektrochemische Ätzen zu nennen, welches beispielsweise in Kombination mit einer inerten Spitze eines STM realisiert werden kann.

Im folgenden sind einige Ausführungsbeispiele skizziert, wie im einzelnen Strukturen verschiedener Proben mittels der erfindungsgemäßen Vorrichtung und des erfindungsgemäßen Verfahrens analysiert werden können.

### 1. Beispiel: Die räumliche Struktur mikrophasenseparierter Blockcopolymere.

Fast alle Werkstoffe bestehen aus Mischungen verschiedener Materialien. Auf diese Weise können die Eigenschaften der einzelnen Komponenten kombiniert und Werkstoffe mit neuen und maßgeschneiderten Eigenschaften erzeugt werden. So besteht zum Beispiel das thermoplastische Elastomer SBR ("styren-butadien rubber") aus einer Mischung von hartem Polystyrol (PS) mit weichem Polybutadien (PB), wobei die einzelnen Styrol- und Butadien-Bausteine kovalent zu größeren Makromolekülen verbunden sind. Je nach Molekülstruktur und Mischungsverhältnis bilden sich im Festkörper einige zig Nanometer große Bereiche von hartem PS in einer weichen (elastischen) Matrix von PB aus. Die Größe, die Form, und die räumliche Verteilung der PS- und PB-Bereiche hat einen entscheidenden Einfluß auf die mechanischen Eigenschaften des Werkstoffs SBR.

Die Verteilung von PS und PB an der Oberfläche n eines Stücks SBR kann mittels Rasterkraftmikroskopie im "TappingMode™" mit hoher lateraler Auflösung (einige Nanometer) abgebildet werden. Bei diesem Verfahren wird eine mechanisch schwingende Spitze in geringem und insbesondere konstantem Abstand über die Probenoberfläche geführt und gleichzeitig sowohl der Ort der Spitze als auch die Phasenlage der Schwingung der Spitze relativ zu einer antreibenden Schwingung registriert. Anhand der Phasenlage können unterschiedlich weiche (bzw. harte) Bereiche an der Probenoberfläche unterschieden und eine Karte dieser Bereiche erstellt werden. Da PB bei Raumtemperatur weicher als PS ist, können auf diese Weise die beiden Komponenten des Werkstoffs voneinander unterschieden und die laterale Verteilung von PS und PB an der Probenoberfläche mit hoher (lateraler) Ortsauflösung bestimmt werden. Auf diese Weise erhält man sowohl die Topographie der Probenoberfläche n, d.h. die Höhe zₙ als Funktion des Ortes (x,y), als auch eine Karte der Weichheit der Oberfläche, nämlich das sogenannte Phasenbild, d.h. die Phasenlage φₙ als Funktion des Ortes (x,y). Die Topographie zₙ(x,y) und das Phasenbild φₙ(x,y) können zu einer dreidimensionalen Karte der Phasenlage φₙ(x,y,z) kombiniert werden, die als Karte Sₙ des lokalen Mischungsverhältnises von PS und PB an der Probenoberfläche interpretiert werden kann (Fig. 2).

Um die Verteilung von PS und PB in der Probe zu bestimmen, wird die Probe schichtweise abgetragen und nach jedem Abtragschritt die neu entstandene Oberfläche mit dem rasterkraftmikroskopischen Verfahren untersucht. Das Abtragen kann im Fall des SBR durch Abätzen einer dünnen Schicht mittels eines Trockenätzverfahrens erfolgen. z.B. ex-situ in einem Plasmareinigungsgerät, wie es für die Reinigung optischer Bauteile von organischen Verunreinigungen verwendet wird. Auf diese Weise kann innerhalb etwa 20 Sekunden eine im Mittel 5 nm dicke Schicht von der zu untersuchenden Probe abgetragen werden. Nach dem Abtragen wird die neu entstandene Probenoberfläche wieder mit dem rasterkraftmikroskopischen Verfahren untersucht und eine neue dreidimensionale Karte der Phasenlage an dieser neu freigelegten Oberfläche erstellt. Wird die Probe zum Ätzen aus dem Kraftmikroskop ausgebaut, ist es für das erfindungsgemäße Verfahren von entscheidender Bedeutung, daß nach dem Ätzen mit dem Rasterkraftmikroskop wieder genau die zuvor untersuchte Stelle der Probe wiedergefunden und abgebildet wird. Dies kann auf verschiedene Arten erreicht werden. Entweder ist die Probe auf einem Probenhalter montiert, der mit der notwendigen Genauigkeit aus dem Rasterkraftmikroskop aus- und wieder eingebaul werden kann, oder die Probe muß im Rasterkraftmikroskop mit einem Verschiebetisch so verschoben werden, daß die zu untersuchende Stelle wieder unter der Spitze das Rasterkraftmikroskops zu liegen kommt. Zum Repositionieren der Probe und Wiederfinden der gleichen Stelle kann man ein optisches Mikroskop verwenden, mit dem man die relative Lage von Probe und Spitze beobachten kann. Zusätzlich können auch Bilder der Probe mit dem Kraftmikroskop erstellt werden. In beiden Fällen kann man sich anhand größerskaliger Strukturen der Probe. z.B. Bereiche mit charakteristischen Formen, Gräben, Hügeln, Staubkörnern oder anderen Defekten in charakteristischer Anordnung, oder zum Zwecke der Orientierung angebrachter Markierungen, wie z.B. Kratzern, orientieren. Auf diese Weise kann eine bestimmte Stelle der Probe ohne großen Aufwand mit wenigen Nanometern Genauigkeit wiedergefunden werden. Unter Verwendung bekannter Verfahren der elektronischen Bildaufnahme und -verarbeitung kann dieses Repositionierverfahren vollständig automatisiert werden.

Die relative Position benachbarter Bildpunkte kann bei der Rasterkraftmikroskopie mit großer Präzision gemessen werden. Dabei ist eine Genauigkeit von bis zu 0.01 Nanometern erreichbar. Im Gegensatz dazu kann die absolute Position der Oberfläche in z-Richtung nicht ohne weiteres mittels Rasterkraftmikroskopie bestimmt werden. Um die absolute Position der freigelegten Oberfläche n+1 in z-Richtung festzulegen, können verschiedene Verfahren verwendet werden. Zum Beispiel kann man sich an der vorhergehenden Oberfläche n orientieren und die z-Position zₙ₊₁ der neuen Oberfläche n+1 so festlegen, daß der (gegebenfalls über einzelne Bereiche) gemittelte Abstand a_{n,n+1}(x,y,z) der benachbarten Oberflächen der im mittel abgetragenen Schichtdicke a_{n,n+1} entspricht (Fig. 4).

Die im Mittel abgetragene Schichtdicke a_{n,n+1} kann auf verschiedene Weise bestimmt werden. Entweder aus der insgesamt abgetragenen Materialmenge z.B. durch Wägen, oder aus dem Abstand der Oberflächen n und n+1 (gegebenenfalls über größere Bereiche gemittelt) zu Fixpunkten auf der Probe mit bekannten Abmessungen und Positionen, die sich während des Abtragens nicht oder in bekannter Weise verändern. z.B. der Höhe von Hügeln oder bei dünnen Schichten der Tiefe von Gräben, die bis auf das Substrat reichen (Figur 5). Bei dünnen Schichten kann auch die über einen großen Bereich gemittelte Schichtdicke und somit auch die mittlere Abtragrate mittels Ellipsometrie oder Interferometrie bestimmt werden.

Auf diese Weise fährt man fort bis der gesamte interessierende Probenbereich schrittweise abgetragen und die dabei freigelegten Oberflächen rasterkraftmikroskopisch untersucht worden sind. Man erhält so eine Reihe dreidimensionaler Karten Sₙ, auf denen die untersuchten Eigenschaften - in diesem Fall die Phasenlage φ- verzeichnet sind (Fig. 2). Aus diesen Karten Sₙ kann mit geeigneten mathematischen Verfahren die räumliche Verteilung der Phasenlage und damit der Verteilung von PS und PB in der Probe bestimmt werden.

Ähnlich wie bei anderen, schichtweise die Probe erfassenden Verfahren, wie z.B. der Computertomographie, können aufeinander folgende Karten anhand gemeinsamer charakteristischer Punkte oder Formen mit hoher Präzision zur Deckung gebracht und gegebenenfalls entzerrt werden (Bildregistrierung).

Besonderes Kennzeichen des erfindungsgemäßen Verfahrens und entscheidend für die hohe Ortsauflösung in z-Richtung ist, daß im allgemeinen die Karten Sₖ gekrümmte Flächen im Raum sind, und daß diese Krümmung bei der räumlichen Rekonstruktion berücksichtigt wird. (Figur 6) Im Gegensatz dazu erzeugen und verwenden andere Verfahren, wie z.B. die Computertomographie oder die konfokale Mikroskopie, einen Stapel ebener und äquidistanter Karten der erfaßten Eigenschaften. Um für diese Fälle geschaffene mathematische Verfahren der räumlichen Rekonstruktion und Darstellung bei dem erfindungsgemäßen Verfahren anwenden zu können, können die auf den gekrümmten Flächen Sₙ verzeichneten Eigenschaften Pⱼ beispielsweise durch Interpolation auf ein entsprechendes regelmäßiges Gitter abgebildet werden.

Die räumliche Auflösung ist lateral durch das rasterkraftmikroskopische Abbildungsverfahren und in diesem Fall durch den Radius der Spitze bestimmt. Heutige Standardspitzen haben einen Spitzenradius von etwa 10 nm, es sind aber auch Spitzen mit nur 2 nm Radius erhältlich. Die Auflösung in z-Richtung ist im wesentlichen durch den lokalen Abstand zweier benachbarter Oberflächen, d.h. die mittlere Dicke a_{n,n+1} der bei einem Abtragschritt A_{k,k+1} abgetragenen Schicht bestimmt. (siehe Figur 6) Diese kann ohne großen Aufwand ebenfalls 2 nm betragen. Damit erscheint es möglich, mit der erfindungsgemäßen Vorrichtung und dem erfindungsgemäßen Verfahren die räumliche Verteilung der einzelnen Komponenten eines polymeren Werkstoffs, z.B. von PS und PB in SBR, mit bis zu 2 nm Auflösung in allen drei Raumrichtungen im Ortsraum zu erfassen (siehe Figur 6)

### 2. Beispiel: Räumliche Struktur von biologischen Proben, z.B. Ultrastruktur einzelner Zellen.

Um Dünnschnitte biologischer Proben, z.B. Gewebe, Zellen, etc. zu erzeugen und diese mit optischer Mikroskopie und Elektronenmikroskopie zu untersuchen, werden die Proben häufig in Harze eingebettet. Diese Harze sind im allgemeinen Polymere, so daß solche Dünnschnitte unmittelbar der Untersuchung mit einer erfindungsgemäßen Vorrichtung unter Anwendung des erfindungsgemäßcn Verfahrens zugänglich sind.

Zum Einbetten werden die zu untersuchenden Zellen zunächst mit niedermolekularen organischen Verbindungen (den Monomeren) getränkt, die dann anschließend durch Starten eincr Polymerisationsreaktion zu längerkettigen Polymeren (dem Harz) verbunden werden. Da unterschiedliche Teile einer Zelle (Membran, Zellkern, Zellorganellen, etc.) in unterschiedlichem Maße mit Monomeren getränkt werden und da unterschiedliche Teile einer Zelle im allgemeinen unterschiedliche chemische Zusammensetzungen besitzen, führt dies dazu, daß die Polymerisationsreaktion der Monomere in den verschiedenen Teilen der Zelle durch die Anwesenheit unterschiedlicher Zellbestandteile unterschiedlich abläuft und zu unterschiedlichen Ergebnissen führt. Nach dem Einbetten besitzen somit die verschiedenen Bereiche einer Zelle im allgemeinen unterschiedliche mechanische und chemische Eigenschaften, z.B. Härte, Färbung, Fluoreszenz, etc., deren räumliche Verteilung mit einer erfindungsgemäßen Vorrichtung und dem erfindungsgemäßen Verfahren mit hoher räumlicher Auflösung (wenige Nanometer) erfaßt werden kann.

Im Gegensatz zur Elektronenmikroskopie ist für das erfindungsgemäße Verfahren weder ein Vakuum noch eine Kontrastierung mittels Schwermetallen erforderlich. Auch müssen keine Dünnschnitte erzeugt werden, so daß an die mechanische Stabilität des Einbettmittels keine hohen Anforderungen gestellt werden müssen. Zusammen mit der Vielzahl neuartiger Kontrastmechanismen der Rastersondenmikroskopie, die bisher nur an Probenoberflächen mit hoher lateraler Auflösung eingesetzt wurden, verspricht die Kombination des erfindungsgemäßen Verfahrens mit sowohl konventionellen als auch neu zu entwickelnden Einbett-Techniken völlig neuartige Einblicke in die dreidimensionale räumliche Struktur der Zellen mit wenigen Nanometern Auflösung in allen drei Raumrichtungen.

### 3. Beispiel: Anwendung auf rauhe Oberflächen.

Da das erfindungsgemäße Verfahren mittels einer erfindungsgemäßen Vorrichtung auch auf Oberflächen hoher Rauhigkeit angewendet werden kann, erscheint es möglich, biologische Proben und komplexe Flüssigkeiten (z.B. Dispersionen und Suspensionen kolloidaler Teilchen) durch Gefrierbruch zu präparieren und die Proben von der Bruchfläche ausgehend mittels einer erfindungsgemäßen Vorrichtung mit dem erfindungsgemäßen Verfahren zu untersuchen. Der beispielsweise dazu notwendige Betrieb eines Rastersondenmikroskops bei tiefen Temperaturen ist Stand der Technik, ebenso wie die Präparation und rastersondenmikroskopische Untersuchung von Kristallbruchflächen bei tiefen Temperaturen.

Mit dem erfindungsgemäßen Verfahren kann unmittelbar an der Probenoberfläche eines größeren Stücks des zu untersuchenden Materials gestartet werden. Es kann aber auch das Probeninnere ausgehend von einer Bruchfläche (z.B. durch Gefrierbruch erzeugt) untersucht werden. Eine andere Möglichkeit ist die Untersuchung von Dünnschnitten des Werkstoffs, die auf ein festes Substrat aufgebracht sind. Eine durch das Schneiden des Dünnschnittes eventuell beschädigte oberflächennahe Schicht ist für das erfindungsgemäße Verfahren kein Hindernis, da sie während des Verfahrens abgetragen wird. Zudem kann die Struktur in Oberflächennähe mit der im Innern des Dünnschnitts verglichen werden und auf diese Weise mögliche Beschädigungen und Artefakte in der Nähe der Oberfläche erkannt werden.

Das erfindungsgemäße Verfahren eignet sich insbesondere auch für die Untersuchung der Struktur dünner Filme, z.B. auf Glas oder anderen Trägermaterialien, die mit anderen Methoden, z.B. Transmissionselektronenmikroskopie, nicht untersucht werden können, da z.B. das Trägermaterial entweder nicht für Elektronen transparent ist oder nicht zu Dünnschnitten verarbeitet werden kann.

### 4. Beispiel: Struktur von Halbleiterbauelementen

Das erfindungsgemäße Verfahren ist nicht auf polymere Werkstoffe begrenzt. Es eignet sich auch für die Untersuchung der räumlichen Struktur von Halbleiterbauelementen, die im allgemeinen aus einer komplizierten räumlichen Anordnung verschiedenartiger Materialien auf kleinstem Raum (wenige 100 Nanometer)) bestehen. Die räumliche Verteilung der verschiedenen Materialien in solchen Bauelementen kann mit bisher bekannten Methoden nicht räumlich erfaßt werden, da sie entweder für Elektronen nicht transparent genug sind oder keinen ausreichenden Kontrast in der Elektronenmikroskopie liefern. Mit schichtabtragenden Methoden, z.B. dynamischer SIMS, können sie ebenfalls nicht untersucht werden, da geeignete Verfahren zur gleichmäßigen Schichtabtragung fehlen. Da für das erfindungsgemäße Verfahren rauhe Oberflächen und eine ungleichmäßige Abtragrate kein Hindernis darstellen, können mit dem erfindungsgemäßen Verfahren solche Halbleiterbauelemente mit hoher räumlicher Auflösung untersucht werden. Für das Abtragen können die vielfältigen Ätzverfahren der Halbleitertechnologie verwendet werden. Insbesondere das Trockenätzen mit reaktiven Ionen ("reactive ion etching") erscheint erfolgversprechend, da es relativ materialunabhängig ätzt. Um eine allzu rauhe Oberfläche zu vermeiden, können z.B. bei zwei aufeinanderfolgenden Abtragvorgängen zwei verschiedene Ätzverfahren eingesetzt werden, um so eine im Mittel relativ gleichmäßige Abtragung zu erreichen. Um die in einem Halbleiterbauelement aneinander grenzenden Materialien. z.B. Si. SiOx, Metalle und Kunststoffe, voneinander unterscheiden zu können, stehen z.B. viele rastersondenmikroskopische Verfahren zur Verfügung. Beispielsweise können wie im Beispiel 1 Unterschiede in der Härte der Materialien verwendet werden. Aber auch Unterschiede in der Reibung zwischen den Materialien und der Sondenspitze können detektiert werden. Eine weitere Möglichkeit ist, die lokale Leitfähigkeit zu messen. Mittels "Scanning Capacitance Microscopy" (ScaM) kann aber auch die lokale Ladungsträgerkonzentration gemessen werden und mittels der "Electric Force Microscopy" (EFM) können laterale Unterschiede der Dielekrizitätskonstanten gemessen werden. Über diese genannten Methoden hinaus sind in den letzten Jahren viele weitere rastersondenmikroskopische Methoden und Kontrastmechanismen entwickelt worden, die es erlauben, Eigenschaften an Probenoberflächen mit zum Teil hohen lateralen Auflösungen zu vermessen. Die erfindungsgemäße Vorrichtung und das erfindungsgemäße Verfahren ermöglichen es, diese neuartigen Kontrastmechanismen für die *räumliche* Erfassung der entsprechenden Eigenschaften mit vergleichbar hoher räumlicher Auflösung zu nutzen, ohne daß dafür ein besonders gleichmäßiges Abtragverfahren notwendig ist.

### 5. Beispiel: Atomare Auflösung in allen drei Raumrichtungen

Mittels Rastersondenmikroskopie kann die Position einzelner Atome abgebildet werden. Dies ist auch in Flüssigkeiten möglich, z.B. mit der Rastertunnelmikroskopie. Geeignete Geräte sind kommerziell erhältlich. Ein solches Gerät kann mit einem geeigneten Ätzverfahren, z.B. elektrochemischem Ätzen, kombiniert werden, um die räumliche Lage einzelner Dotieratome in einem Halbleiter mit atomarer Auflösung zu bestimmen. Beim elektrochemischen Ätzen kann die bei einem Abtragschritt geflossene Ladung als Maß für die abgetragene Materialmenge und damit die mittlere Position einer Oberfläche n in z-Richtung verwendet werden. Bei diesem Verfahren wird man bei einem einzelnen Abtragschritt deutlich weniger als eine Atomlage abtragen, um sicher zu sein, kein Atom zu "übersehen". Zwei benachbarte Oberflächen können dabei anhand größerskaliger Objekte, z.B. Inseln von Atomen oder Kanten von Monolagen, zur Deckung gebracht werden. Der auf diese Weise bestimmte laterale Abstand zweier benachbarter Oberflächen (in x,y-Richtung) kann verwendet werden, um die thermische Drift zu kompensieren, die bei so kleinen Abmessungen und langen Beobachtungszeiten nicht vernachlässigt werden kann. Im Fall einer langsamen Abtragung von z.B. 10% einer Monolage in einem Abtragschritt kann der lokale Abstand zweier benachbarter Oberflächen anhand einzelner Atome atomweise abgezählt werden.

### 6. Beispiel: Verwendung anderer als rastersondenmikroskopischer Mikroskopieverfahren.

Das erfindungsgemäße Verfahren ist nicht auf die Rastersondenmikroskopie begrenzt. Sowohl für die Erfassung der interessierenden Eigenschaft P an der Probenoberfläche n, als auch für die Bestimmung der Topographie zₙ(x,y) können andere Mikroskopieverfahren verwendet werden. Zum Beispiel kann die interessierende Eigenschaft Pⱼ ortsaufgelöst mit optischer Mikroskopie erfaßt werden (z.B. Reflexion, Fluoreszenz, Ramanstreuung etc.). Die Topographie zₙ(x,y) kann entweder mittels Rastersondenmikroskopie oder mittels Phaseninterferenzmikroskopie oder auch mittels konfokaler Laser-Scanning-Mikroskopie bestimmt werden. Auf diese Weise können Eigenschaften nicht transparenter heterogener Proben mit optischen Verfahren räumlich mit bis zu 100 nm Auflösung erfaßt werden. Zudem ist das Verfahren leicht automatisierbar und erfordert kein gleichmäßiges Abtragen, so daß z.B. einfaches und schnelles, jedoch bei heterogenen Proben in der Regel ungleichmäßiges naßchemisches Ätzen, eingesetzt werden kann. Insbesondere verspricht das erfindungsgemäße Verfahren besonders bei neuen Werkstoffen große Zeitvorteile, da für den neuen Werkstoff kein spezielles gleichmäßiges Abtragverfahren entwickelt werden muß. Ein weiterer großer Vorteil des erfindungsgemäßen Verfahrens ist, daß die dafür bestehenden Geräte (z.B. ein Rasterkraftmikroskop mit integriertem optischen Mikroskop, ein konfokales Laser-Scanning-Mikroskop, oder ein Phaseninterferenz-mikroskop) nicht oder nur sehr wenig verändert werden müssen. Moderne Geräte dieser Art sind bereits vollständig automatisiert und computergesteuert, so daß nur noch eine für das zu untersuchende Material geeignete Abtragvorrichtung sowie ein Softwaremodul für die Steuerung und Auswertung hinzugefügt werden müßten.

Unter Oberfläche wird auch eine oberflächliche Schicht oder Lage bzw. ein räumlicher Bereich in Nähe der Probenoberfläche verstanden. Bei mehreren Meßverfahren nach der Erfindung spielt auch das Volumen unter der zweidimensionalen Oberfläche eine Rolle, z.B. dessen Leitfähigkeit, Kapazität usw. Unter dem Erfassen mindestens einer Eigenschaft der Probe wird auch eine erfaßte Meßgröße oder ein davon abgeleitetes Signal verstanden. Wenn gesprochen wird von der Erfassung mindestens einer Eigenschaft der Probe auf der Topographie einer Oberfläche, so ist hierunter auch eine Erfassung der mindestens einen Eigenschaft in der Nähe der Topographie zu verstehen.

In einer bevorzugten Ausführung wird die Ermittlung der räumlichen Verteilung einer Eigenschaft kombiniert mit der Ermittlung der räumlichen Verteilung der Abtragrate. Auf diese Weise kann die räumliche Änderung einer an oder in der Nähe der Oberfläche erfaßten Eigenschaft ermittelt werden. Dies ist dann vorteilhaft, wenn das Volumen deutlich zum Meßsignal beiträgt, wie es bei der Messung der lokalen Leitfähigkeit oder der Ladungsträgerkonzentration der Fall ist. Auf diese Weise kann der Beitrag des Volumens abgezogen werden und kann die Tiefenauflösung für die eigentlich interessierende Eigenschaft, z.B. Leitfähigkeit in unmittelbarerer Nähe der Oberfläche, deutlich erhöht werden. Dies ist z.B. wichtig bei Anwendungen in der Halbleiterbranche.

Erfindungsgemäss können Strukturen vorzugsweise unter 1 Mikrometer, insbesondere unter 400 Nanometer und bevorzugt unter 200 Nanometer erfasst werden. Es kann der dreidimensionale Verlauf einer Dotierung eines Halbleiters gemessen werden.

## Patentansprüche

1. Vorrichtung zur Ermittlung der räumlichen Verteilung von Eigenschaften einer insbesondere heterogenen Probe (1), bestehend aus:
• einem Mikroskop (2), welches eine Steuerung (21) aufweist, zur dreidimensionalen Erfassung der Topographie zₙ(x,y) der Oberfläche n einer Probe (1),
• einer Sonde (3), welche eine Steuerung (31) aufweist, zur ortsaufgelösten Erfassung einer oder mehrerer Eigenschaften Pⱼ der Probe (1) auf der Topographie zₙ(x,y) der Oberfläche n,
• einer Abtragvorrichtung (4), beispielsweise einer Vorrichtung zum Plasmaätzen, zum Ätzen mit reaktiven Gasen oder Flüssigkeiten, oder zum chemomechanischen Polieren, welche eine Steuerung (41) aufweist und mittels welcher in einem Abtragvorgang A_{n,n+1} eine Schicht von der Oberfläche n der Probe (1) abgetragen werden kann,
• einer computergestützen Bildverarbeitungsvorrichtung (6), welche dazu ausgerüstet ist, aus einer vom Mikroskop ermittelten Folge von Oberflächentopographien zₙ(x,y) bis zₙ₊ₘ(x,y) und den auf diesen Topographien erfaßten Eigenschaften Pⱼ(zₙ(x,y)) bis Pⱼ(zₙ₊ₘ(x,y)) ein dreidimensionales Abbild der räumlichen Verteilung der Eigenschaften Pⱼ im der Probe zu erzeugen.

2. Vorrichtung zur Ermittlung der räumlichen Verteilung von Eigenschaften einer insbesondere heterogenen Probe (1), bestehend aus:
• einem Rastersondenmikroskop (20), beispielsweise einem STM ("Scanning Tunnelling Microscope"), einem AFM ("Atomic Force Microscope"), einem SNOM ("Scanning Nearfield Optical Microscope") oder einem von diesen abgeleiteten Rastersondenmikroskop, welches eine Steuerung (201), einen Mikroskopkopf (202) und eine Sonde (203) aufweist, wobei das Rastersondenmikroskop (20) dazu ausgerüstet ist, die Topographie zₙ(x,y) der Probenoberfläche n und eine oder mehrere Probeneigenschaften Pⱼ, beispielsweise elektrische Leitfähigkeit, elektrische Ladungsdichte, Reibungskoeffizient, Elastizität, Dielektrizitätskonstante oder Magnetisierung ortsaufgelöst auf dieser Topographie zₙ(x,y) zu erfassen,
• einer Abtragvorrichtung (4), beispielsweise einer Vorrichtung zum Plasmaätzen, zum Ätzen mit reaktiven Gasen oder Füssigkeiten, oder zum chemomechanischen Polieren, welche eine Steuerung (41) aufweist und mittels welcher in einem Abtragvorgang A_{n,n+1} eine Schicht von der Oberfläche n der Probe (1) abgetragen werden kann,
• einer computergestützen Bildverarbeitungsvorrichtung (6), welche dazu ausgerüstet ist, aus einer vom Rastersondenmikroskop (20) ermittelten Folge von Oberflächentopographien zₙ(x,y) bis zₙ₊ₘ(x,y) und den auf diesen Topographien erfaßten Eigenschaften Pⱼ(zₙ(x,y)) bis Pⱼ(zₙ₊ₘ(x,y)) ein dreidimensionales Abbild der räumlichen Verteilung der Eigenschaften Pⱼ in der Probe (1) zu erzeugen.

3. Vorrichtung zur Ermittlung der räumlichen Verteilung eines Parameters, der eine Abtragrate einer insbesondere heterogenen Probe (1) charakterisiert, bestehend aus:
• einem Rastersondenmikroskop (20), beispielsweise einem STM ("Scanning Tunneling Microscope"), einem AFM ("Atomic Force Microscope"), einem SNOM ("Scanning Nearfield Optical Microscope") oder einem von diesen abgeleiteten Rastersondenmikroskop, welches eine Steuerung (201), einen Mikroskopkopf (202) und eine Sonde (203) aufweist, wobei das Rastersondenmikroskop (20) dazu ausgerüstet ist, die Topographie zₙ(x,y) der Probenoberfläche n zu erfassen,
• einer Abtragvorrichtung (4), beispielsweise einer Vorrichtung zum Plasmaätzen, zum Ätzen mit reaktiven Gasen oder Füssigkeiten, oder zum chemomechanischen Polieren, welche eine Steuerung (41) aufweist und mittels welcher in einem Abtragvorgang A_{n,n+1} eine Schicht von der Oberfläche n der Probe (1) abgetragen werden kann,
• einer computergestützen Bildverarbeitungsvorrichtung (6), welche dazu ausgerüstet ist, aus einer vom Rastersondenmikroskop (20) ermittelten Folge von Oberflächentopographien zₙ(x,y) bis zₙ₊ₘ(x,y) die bei den Abtragvorgängen A_{k,k+1}, k = n,...,n+m-1 lokal abgetragene Materialmenge, insbesondere die lokal abgetragenen Schichtdicken a_{k,k+1}(x,y,z), zu bestimmen und daraus ein dreidimensionales Abbild der Verteilung eines Parameters in der Probe (1) zu erzeugen, der eine lokale Abtragrate charakterisiert, insbesondere ein Abbild der lokalen Abtragrate selbst.

4. Vorrichtung zur Ermittlung der räumlichen Verteilung einer oder mehrerer Eigenschaften einer Probe (1) gemäß Anspruch 1, 2 oder 3, **dadurch gekennzeichnet, daß** sie eine Meßvorrichtung (5), welche eine Steuerung (51) aufweist, zur Bestimmung der bei einem Abtragvorgang A_{k,k+1} durch die Abtragvorrichtung (4) von der Probenoberfläche abgetragene mittlere Schichtdicke a_{k,k+1} aufweist, die vorzugsweise in die Abtragvorrichtung (4) oder in das Mikroskop (2), insbesondere das Rastersondenmikroskop (20), integriert sein kann.

5. Vorrichtung zur Ermittlung der räumlichen Verteilung einer oder mehrerer Eigenschaften einer Probe (1) gemäß Anspruch 1,2,3 oder 4, **dadurch gekennzeichnet, daß** die Steuerung (21) des Mikroskops (2), insbesondere die Steuerung (201) des Rastersondenmikroskops (20), sowie die Steuerung (31) der Sonde (3), die Steuerung (41) der Abtragvorrichtung (4), die Steuerung (51) der Meßvorrichtung (5) zur Bestimmung der bei einem Abtragvorgang A_{k,k+1} abgetragenen mittleren Schichtdicke a _{k,k+1} und die Steuerung (61) der Bildverarbeitungsvorrichtung (6) oder eine Teilmenge dieser Steuerungen mit einer zentralen Steuerung verbunden sind, insbesondere in eine zentrale Steuerung integriert sind.

6. Vorrichtung zur Ermittlung der räumlichen Verteilung einer oder mehrerer Eigenschaften einer Probe (1) gemäß Anspruch 1,2,3 oder 4, **dadurch gekennzeichnet, daß** die Steuerung (61) der computergestützten Bildverarbeitungsvorrichtung (6) in die Steuerung (21) des Mikroskops (2), insbesondere in die Steuerung (201) des Rastersondenmikroskops (20) integriert ist.

7. Vorrichtung zur Ermittlung der räumlichen Verteilung einer oder mehrerer Eigenschaften einer Probe (1) gemäß Anspruch 1,2,3 oder 4, **dadurch gekennzeichnet, daß** die Steuerung (41) der Abtragvorrichtung (4) in die Steuerung (21) des Mikroskops (2), insbesondere in die Steuerung (201) des Rastersondenmikroskops (20) integriert ist.

8. Vorrichtung zur Ermittlung der räumlichen Verteilung einer oder mehrerer Eigenschaften einer Probe (1) gemäß Anspruch 1,2,3 oder 4, **dadurch gekennzeichnet, daß** die Abtragvorrichtung (4) global wirksam ist, d.h. daß die von der Abtragvorrichtung (4) vorgenommene Abtragung auf der gesamten zu untersuchenden Probenoberfläche im wesentlichen gleichzeitig erfolgt.

9. Vorrichtung zur Ermittlung der räumlichen Verteilung einer oder mehrerer Eigenschaften einer Probe (1) gemäß Anspruch 1,2,3 oder 4, **dadurch gekennzeichnet, daß** die Abtragvorrichtung (4) lokal in der direkten Umgebung der Sonde (3) wirksam ist, d.h. die von der Abtragvorrichtung (4) vorgenommene Abtragung nur in der direkten Umgebung der Sonde (3) erfolgt.

10. Verfahren zur Ermittlung der räumlichen Verteilung von Eigenschaften Pⱼ einer Probe (1), die folgenden Verfahrensschritte umfassend:
a) eine Aufnahme der Topographie zₙ(x,y) der Oberfläche n einer Probe (1), welche sich im wesentlichen in einer zur x-y-Ebene parallelen Ebene bei z = zₙ erstreckt, mittels eines Mikroskops (2), insbesondere mittels eines Rastersondenmikroskops (20), und einer oder mehrerer Eigenschaften Pⱼ(zₙ(x,y)) darauf mittels einer Sonde (3), insbesondere mittels eines Rastersondenmikroskops (20),
b) einer Abtragung einer Schicht von der Oberfläche n der Probe (1) im wesentlichen in z-Richtung mittels einer Abtragvorrichtung (4) in einem Abtragvorgang A_{n,n+1}, wobei eine neue Oberfläche n+1 freigelegt wird,
c) eine m-fache Wiederholung der Schritte a) und b) unter Charakterisierung der jeweiligen Probenoberfläche n+i, i = 1,...,m und Abtragung einer weiteren Schicht von der Oberfläche n+i der Probe (1) in einem Abtragvorgang A_{n+i,n+i+1}, wobei die Zahl m durch die Größe des zu charakterisierenden Bereichs der Probe (1) und die gewünschte Tiefenauflösung bestimmt ist, vorzugsweise m zwischen 5 und 1000 liegt, insbesondere m zwischen 10 und 500 liegt, und
d) einer Erzeugung eines dreidimensionalen Abbilds der Eigenschaften Pⱼ der Probe (1) aus den Oberflächentopographien zₙ(x,y) bis zₙ₊ₘ(x,y) und den Eigenschaften Pⱼ(zₙ(x,y)) bis Pⱼ(zₙ₊ₘ(x,y)) mittels einer computergestützten Bildverarbeitungsvorrichtung (6).

11. Verfahren zur Ermittlung der räumlichen Verteilung eines die lokale Abtragrate einer Probe (1) charakterisierenden Parameters in der Probe (1), die folgenden Verfahrensschritte umfassend:
a) eine Aufnahme der Topographie zₙ(x,y) der Oberfläche n einer Probe (1), welche sich im wesentlichen in einer zur x-y-Ebene parallelen Ebene bei z = zₙ erstreckt, mittels eines Mikroskops (2), insbesondere mittels eines Rastersondenmikroskops (20),
b) eine Abtragung einer Schicht von der Oberfläche n der Probe (1) im wesentlichen in z-Richtung in einem Abtragvorgang A_{n,n+1} mittels einer Abtragvorrichtung (4), wobei eine neue Oberfläche n+1 freigelegt wird,
c) eine m-fache Wiederholung der Schritte a) und b) unter Charakterisierung der jeweiligen Probenoberfläche n+i, i = 1,...,m und Abtragung einer weiteren Schicht von der Oberfläche n+i der Probe in einem Abtragvorgang A_{n+i,n+i+1,} wobei die Zahl m durch die Größe des zu charakterisierenden Bereichs der Probe (1) und die gewünschte Tiefenauflösung bestimmt ist, vorzugsweise m zwischen 5 und 1000 liegt, insbesondere m zwischen 10 und 500 liegt, und
d) einer Bestimmung der bei den Abtragvorgängen A_{n+i,n+i+1} lokal abgetragenen Schichtdicken a_{n+i,n+i+1}(x,y,z), und
e) einer Erzeugung eines dreidimensionalen Abbilds der lokal abgetragenen Schichtdicken a_{n+i,n+i+1}(x,y,z) oder eines davon abgeleiteten, eine lokale Abtragrate der Probe charakterisierenden Parameters mittels einer computergestützten Bildverarbeitungsvorrichtung (6).

12. Verfahren nach Anspruch 10 oder 11, **dadurch gekennzeichnet, daß** die lokale absolute z-Position zₖ einer Oberfläche k einer Probe (1) bestimmt wird aus einer mittleren Lage zₖ dieser Oberfläche k oder Teilbereichen davon und der mittels eines Mikroskops (2), insbesondere mittels eines Rastersondenmikroskops (20), ermittelten lokalen Abweichung Δzₖ von der mittleren Lage zₖ.

13. Verfahren nach Anspruch 12, **dadurch gekennzeichnet, daß** die mittlere Lage zₖ einer Oberfläche k einer Probe (1) oder Teilbereichen davon bestimmt wird aus der mittleren Lage zₖ₋₁ der Oberfläche k-1 und der im dazwischenliegenden Abtragvorgang A_{k-1,k} abgetragenen Schichtdicke a_{k-1,k,} welche mittels einer Meßvorrichtung (5) zur Bestimmung der abgetragenen mittleren Schichtdicke a_{k-1,k} bestimmt wird.

14. Verfahren nach Anspruch 10 oder 11, **gekennzeichnet dadurch, daß** zur Bestimmung der mittleren Lage zₖ einer Oberfläche k einer Probe (1) oder Teilbereichen davon die Abstände d_{M} in z-Richtung zu in der Probe (1) vorhandenen oder zu diesem Zweck beigefügten Objekten (Marker) (8) verwendet werden, z.B. Gräben, Kugeln, Probenträger etc., deren räumliche Abmessungen und Positionen vor dem Abtragen der Oberfläche n bekannt sind und sich während des Abtragvorgangs nicht oder in bekannter Weise verändern.

15. Verfahren nach Anspruch 10 oder 11, **dadurch gekennzeichnet, daß** die relative laterale Position in x- und y-Richtung zweier benachbarter Oberflächen n und m oder von Teilbereichen zweier benachbarter Oberflächen n und m einer Probe (1) anhand der Positionen in x- und y- Richtung größerskaliger Strukturen oder größerskaliger Objekte (Marker) (8) bestimmt wird, wobei diese größerskaligen Strukturen oder diese größerskaligen Objekte (8) in der Probe (1) naturgemäß vorhanden sind oder zu diesem Zweck beigefügt wurden, deren räumliche Abmessungen und Positionen vor dem Abtragen der Oberfläche n bekannt sind und sich diese während des Abtragvorgangs nicht oder in bekannter Weise verändern.

16. Verfahren nach Anspruch 10 oder 11, **dadurch gekennzeichnet, daß** die zur Abtragung einer Schicht von der Oberfläche der zu charakterisierenden Probe (1) verwendete Abtragvorrichtung (4) global, d.h. auf die gesamte Oberfläche der zu untersuchenden Probe, wirkt.

17. Verfahren nach Anspruch 10 oder 11, **dadurch gekennzeichnet, daß** die zur Abtragung einer Schicht von der Oberfläche der zu charakterisierenden Probe (1) verwendete Abtragvorrichtung (4) lokal, d.h. in der direkten Umgebung der Sonde (3), insbesondere der Sonde (203) des Rastersondenmikroskops (20), wirkt.

18. Verfahren nach Anspruch 10 oder 11, **dadurch gekennzeichnet, daß** die Abtragung einer Schicht von der Probenoberfläche mittels der Abtragvorrichtung (4) in situ erfolgt, d.h. ohne daß eine Entnahme der Probe (1) aus der betriebsgemäßen Position im Mikroskop (2), insbesondere im Rastersondenmikroskop (20), erforderlich ist.

19. Verfahren nach Anspruch 10 oder 11, **dadurch gekennzeichnet, daß** die Abtragung einer Schicht von der Probenoberfläche mittels der Abtragvorrichtung (4) ex situ erfolgt, d.h. daß die Probe (1) aus der betriebsgemäßen Position im Mikroskop (2), insbesondere im Rastersondenmikroskop (20), entnommen und in die betriebsgemäße Position in der Abtragvorrichtung (4) eingesetzt wird.

## Claims

1. Device for detecting the spatial distribution of properties of a more specifically heterogeneous sample (1) consisting of:
a) a microscope (2) that is provided with a control (21) for the three-dimensional detection of the topography zₙ(x,y) of the surface n of a sample (1),
b) a probe (3) that is provided with a control (31) for the spatially resolved detection of one or several properties Pⱼ of the sample (1) on the topography zₙ(x,y) of the surface n,
c) an ablating device (4), e.g. a device for plasma etching, for etching with reactive gases or fluids or for chemimechanical polishing, which is provided with a control (41) and by means of which a layer of the surface n of the sample (1) can be ablated in one ablating procedure A_{n,n+1},
d) a computer-assisted image processing device (6) that is fitted to produce a three-dimensional image of the spatial distribution of the sample properties Pⱼ from a sequence of surface topographies zₙ(x,y) to zₙ₊ₘ(x,y) and from the properties Pⱼ (zₙ(x,y)) to Pⱼ (zₙ₊ₘ(x,y)) detected on these topographies by the microscope.

2. Device for detecting the spatial distribution of properties of a more specifically heterogeneous sample (1) consisting of:
a) a scanning probe microscope (20), an STM (scanning tunneling microscope), an AFM (atomic force microscope), an SNOM (scanning nearfield optical microscope) or a scanning probe microscope derived therefrom for example, which is provided with a control (201), a head of microscope (202) and a probe (203), the scanning probe microscope (20) being equipped to detect at spatial resolution the topography zₙ(x,y) of the sample surface n and one or several sample properties Pⱼ, e.g. electrical conductivity, electrical charge density, coefficient of friction, elasticity, dielectric constant or magnetization on said topography zₙ(x,y),
b) an ablating device (4), e.g. a device for plasma etching, for etching with reactive gases or fluids or for chemimechanical polishing, which is provided with a control (41) and by means of which a layer of the surface n of the sample (1) can be ablated in one ablating procedure A_{n,n+1},
c) a computer-assisted image processing device (6) that is fitted to produce a three-dimensional image of the spatial distribution of the sample properties Pⱼ from a sequence of surface topographies zₙ(x,y) to zₙ₊ₘ(x,y) and from the properties Pⱼ (zₙ(x,y)) to Pⱼ (zₙ₊ₘ(x,y)) detected on these topographies by the scanning probe microscope (20).

3. Device for determining the spatial distribution of a parameter characterizing a rate of ablation of a more specifically heterogeneous sample (1) that consists of:
a) a scanning probe microscope (20), an STM (scanning tunneling microscope), an AFM (atomic force microscope), an SNOM (scanning nearfield optical microscope) or a scanning probe microscope derived therefrom for example, which is provided with a control (201), a head of microscope (202) and a probe (203), the scanning probe microscope (20) being equipped to detect at spatial resolution the topography zₙ(x,y) of the sample surface n,
b) an ablating device (4), e.g. a device for plasma etching, for etching with reactive gases or fluids or for chemimechanical polishing, which is provided with a control (41) and by means of which a layer of the surface n of the sample (1) can be ablated in one ablating procedure A_{n,n+1,}
c) a computer-assisted image processing device (6) that is fitted to determine the quantity of material that has been locally ablated during the ablative procedures A_{k,k+1,} k = n, ...,n+m-1, more specifically the locally ablated layer thicknesses a_{k,k+1}(x,y,z), from a sequence of surface topographies zₙ(x,y) to zₙ₊ₘ(x,y) and from the properties Pⱼ (zₙ(x,y)) to Pⱼ (zₙ₊ₘ(x,y)) detected on these topographies by the scanning probe microscope (20), and to create therefrom a three-dimensional image of the distribution of a parameter in the sample 1 which characterizes a local rate of ablation, more specifically an image of the local rate of ablation itself.

4. Device for determining the spatial distribution of one or several properties of a sample (1) according to the claims 1, 2 or 3, wherein it is provided with a measuring device (5) provided with a control (51) for determining the average layer thickness a_{k,k+1} that has been ablated from the sample surface in one ablative procedure A_{k,k+1} by the ablating device (4), which can preferably be integrated into the ablating device (4) or into the microscope (2), more specifically into the scanning probe microscope (20).

5. Device for determining the spatial distribution of one or several properties of a sample (1) according to the claims 1, 2, 3 or 4, wherein the control (21) of the microscope (2), more specifically the control (201) of the scanning probe microscope (20) as well as the control (31) of the probe (3), the control (41) of the ablating device (4), the control (51) of the measuring device (5) for determining the average layer thickness a_{k,k+1} that has been ablated in one ablative procedure A_{k,k+1} and the control (61) of the image processing device (6) or part of these controls are connected to a central control and are more specifically integrated into a central control.

6. Device for determining the spatial distribution of one or several properties of a sample (1) according to the claims 1, 2, 3 or 4, wherein the control (61) of the image processing device (6) is integrated into the control (21) or (201) of the microscope (2), more specifically of the scanning probe microscope (20).

7. Device for determining the spatial distribution of one or several properties of a sample (1) according to the claims 1, 2, 3 or 4, wherein the control (41) of the ablating device (4)is integrated into the control (21) or (201) of the microscope (2), more specifically of the scanning probe microscope (20).

8. Device for determining the spatial distribution of one or several properties of a sample (1) according to the claims 1, 2, 3 or 4, wherein the ablating device (4) acts globally, i.e. wherein the ablation performed by the ablating device (4) is carried out at substantially the same time on the entire sample surface to be examined.

9. Device for determining the spatial distribution of one or several properties of a sample (1) according to the claims 1, 2, 3 or 4, wherein the ablating device (4) acts locally in the immediate surroundings of the probe (3), i.e. the ablation performed by the ablating device (4) is carried out in the direct surroundings of the probe (3) only.

10. Method for determining the spatial distribution properties Pⱼ of a sample (1) comprising steps of:
a) Acquisition of the topography zₙ(x, y) of the surface n of a sample (1), which substantially extends in a plane parallel to the x-y plane at z = zₙ by means of a microscope, and, by means of a probe (3), more specifically by means of a scanning probe microscope (20), of one or several properties Pⱼ(zₙ(x, y)) thereon,
b) ablation of a layer from the surface n of the sample (1) substantially in z-direction by means of an ablating device (4) in one ablative procedure A_{n, n+1}, a new surface n+1 being laid bare,
c) repetition of the steps a) and b) m times, the respectively laid bare sample surface n+i, i = 1, ..., m being **characterized in** the process and ablation of a further layer from the surface n+i of the sample 1 in an ablative procedure Aₙ₊ᵢ, ₙ₊ᵢ₊₁, the number m being determined by the size of the region of the sample that has to be characterized and by the resolution in depth wanted, m preferably ranging from 5 to 1000, more specifically from 10 to 500, and
d) creation of a three-dimensional image of the properties Pⱼ of the sample (1) from the surface topographies zₙ(x, y) to zₙ₊ₘ(x, y) and the properties Pⱼ(zₙ(x, y)) to Pⱼ(zₙ₊ₘ(x, y)) by means of a computer-assisted image processing device (6).

11. Method of determining the spatial distribution of a sample parameter characterizing the local rate of ablation of a sample (1), comprising the following steps:
a) acquisition, by means of a microscope (2), more specifically by means of a scanning probe microscope (20), of the topography zₙ(x, y) of the surface n of a sample 1, which substantially extends in a plane parallel to the x-y plane at z = zₙ,
b) ablation of a layer from the surface n of the sample (1) substantially in z-direction in one ablative procedure A_{n,n+1} by means of an ablating device (4), a new surface n+1 being laid bare,
c) repetition of the steps a) and b) m times, the respectively laid bare sample surface n+i, i = 1, ..., m being **characterized in** the process and ablation of a further film from the surface of the sample 1 in an ablative procedure A_{n+i, n+i+1,} the number m being determined by the size of the region of the sample (1) that has to be characterized and by the resolution in depth wanted, m preferably ranging from 5 to 1000, m more specifically ranging from 10 to 500,
d) determination of the layer thicknesses a_{n+i,n+i+1}(x, y, z) locally ablated in the ablative procedures A_{n+i,n+i+1} (see Fig. 4), and
e) creation of a three-dimensional image of the locally ablated layer thickness a_{n+i,n+i+1}(x, y, z) or of a parameter derived therefrom that characterizes a local rate of ablation of the sample by means of a computer-assisted image processing device 6.

12. Method according to claim 10 or 11, wherein the local absolute z-position zₖ of a surface k of a sample (1) is determined from an average position zₖ of this surface k or of portions thereof and from the local deviation Δzₖ from the average position zₖ determined by means of a microscope (2), more specifically by means of a scanning probe microscope (20).

13. Method according to claim 12, wherein the average position zₖ of a surface k of a sample (1) or of portions thereof is determined from an average position zₖ of the surface k-1 and from the layer thickness aₖ₋ _{1,k}, ablated in the intermediate ablative procedure A_{k-1,k} and determined by means of a measuring device (5) for determining the average layer thickness a_{k-1,k} ablated.

14. Method according to claim 10 or 11, wherein, for determining the average position zₖ of a surface k of a sample (1) or of portions thereof, the spacings d_{M} in z-direction from the objects (markers) (8) present in the sample or added thereto for this purpose may be used, e.g. ditches, balls, sample carriers and so on, the spatial dimensions and positions of which are known before the surface n is ablated and which do not alter or do not alter in a known way during the ablating procedure.

15. Method according to claim 10 or 11, wherein the relative lateral position in x- and y-direction of two neighboring surfaces n and m or of portions of two neighboring surfaces n and m of a sample (1) is determined with the help of the position in x- and y-direction of one or several larger scale structures or of one or several larger scale objects (markers) (8), these larger scale structure(s) or these larger scale objects (8) being naturally present on a in the sample (1) or having been added for this purpose, wherein their spatial dimensions and positions are known before the surface n is ablated and do not alter or do alter in a known way during the ablating procedure.

16. Method according to claim 10 or 11, wherein the ablating device (4) used for ablating a layer from the surface of the sample (1) to be characterized acts globally, i.e. onto the entire surface of the sample to be examined.

17. Method according to claim 10 or 11, wherein the ablating device (4) used for ablating a layer from the surface of the sample (1) to be characterized acts locally, i.e. in the direct surrounding of the probe (3), more specifically of the probe (203) of the scanning probe microscope (20).

18. Method according to claim 10 or 11, wherein ablation of a layer from the sample surface by means of the ablating device (4) is carried out in situ, i.e. without the need for removing the sample (1) from the operational position in the microscope (2), more specifically from the operational position in the scanning probe microscope (20).

19. Method according to claim 10 or 11, wherein ablation of a layer from the sample surface by means of the ablating device (4) is carried out ex situ, i.e. the sample (1) is removed from the operational position in the microscope (2), more specifically in the scanning probe microscope (20), and is inserted into the operational position in the ablating device (4).

## Revendications

1. Dispositif destiné à déterminer la répartition spatiale de propriétés d'un échantillon (1) en particulier hétérogène, se composant :
• d'un microscope (2) qui présente une commande (21), pour la détection à trois dimensions de la topographie zₙ(x,y) de la surface n d'un échantillon (1),
• d'une sonde (3) qui présente une commande (31), pour la détection à résolution spatiale d'une ou de plusieurs propriétés Pⱼ de l'échantillon (1) sur la topographie zₙ(x,y) de la surface n,
• d'un dispositif d'ablation (4), par exemple d'un dispositif d'attaque au plasma, d'attaque avec des gaz réactifs ou liquides réactifs, ou de polissage chimico-mécanique, qui présente une commande (41) et au moyen duquel une couche peut être ablatée de la surface n de l'échantillon (1) dans une opération d'ablation A_{n,n+1},
• d'un dispositif de traitement d'images (6) assisté par ordinateur, qui est prévu pour générer d'une suite de topographies de surface zₙ(x,y) à zₙ₊ₘ(x,y), déterminée par le microscope, et des propriétés Pⱼ(zₙ(x,y)) à Pⱼ(zₙ₊ₘ(x,y)) détectées sur ces topographies, une image à trois dimensions de la répartition spatiale des propriétés Pⱼ dans l'échantillon.

2. Dispositif de détermination de la répartition spatiale de propriétés d'un échantillon (1) en particulier hétérogène, se composant :
• d'un microscope à sonde de balayage (20), tel qu'un STM (« scanning tunneling microscope »), un AFM (« atomic force microscope »), un SNOM (« scanning nearfield optical microscope » ) ou d'un microscope à sonde de balayage dérivé de ceux-ci, qui présente une commande (201), une tête de microscope (202) et une sonde (203), le microscope à sonde de balayage (20) étant équipé pour détecter à résolution spatiale la topographie zₙ(x,y) de la surface n de l'échantillon et une ou plusieurs propriétés Pⱼ de l'échantillon, telles que la conductibilité électrique, la densité de charge électrique, le coefficient de frottement, l'élasticité, la constante diélectrique ou l'aimantation sur cette topographie zₙ(x,y),
• d'un dispositif d'ablation (4), par exemple d'un dispositif d'attaque au plasma, d'attaque avec des gaz réactifs ou liquides réactifs, ou de polissage chimico-mécanique, qui présente une commande (41) et au moyen duquel une couche peut être ablatée de la surface n de l'échantillon (1) dans une opération d'ablation A_{n,n+1},
• d'un dispositif de traitement d'images (6) assisté par ordinateur, qui est prévu pour générer d'une suite de topographies de surface zₙ(x,y) à zₙ₊ₘ(x,y), déterminée par le microscope à sonde de balayage (20), et des propriétés Pⱼ(zₙ(x,y)) à Pⱼ(zₙ₊ₘ(x,y)) détectées sur ces topographies, une image à trois dimensions de la répartition spatiale des propriétés Pⱼ dans l'échantillon (1).

3. Dispositif de détermination de la répartition spatiale d'un paramètre qui caractérise un taux d'ablation d'un échantillon (1) en particulier hétérogène, se composant :
• d'un microscope à sonde de balayage (20), tel qu'un STM (« scanning tunneling microscope »), un AFM (« atomic force microscope ), un SNOM (« scanning nearfield optical microscope ») ou d'un microscope à sonde de balayage dérivé de ceux-ci, qui présente une commande (201), une tête de microscope (202) et une sonde (203), le microscope à sonde de balayage (20) étant équipé pour détecter la topographie zₙ(x,y) de la surface n de l'échantillon,
• d'un dispositif d'ablation (4), par exemple d'un dispositif d'attaque au plasma, d'attaque avec des gaz réactifs ou liquides réactifs, ou de polissage chimico-mécanique, qui présente une commande (41) et au moyen duquel une couche peut être ablatée de la surface n de l'échantillon (1) dans une opération d'ablation A_{n,n+1},
• d'un dispositif de traitement d'images (6) assisté par ordinateur, qui est prévu pour déterminer à partir d'une suite de topographies de surface zₙ(x,y) à zₙ₊ₘ(x,y), déterminée par le microscope à sonde de balayage (20), la quantité de matière ablatée localement dans les opérations d'ablation A_{k,k+1}, k = n,...,n+m-1, en particulier les épaisseurs de couche a_{k,k+1}(x,y,z) ablatées localement, et d'en générer une image à trois dimensions de la répartition d'un paramètre dans l'échantillon (1), qui caractérise un taux d'ablation locale, en particulier une image du taux d'ablation locale même.

4. Dispositif de détermination de la répartition spatiale d'une ou de plusieurs propriétés d'un échantillon (1) selon la revendication 1, 2 ou 3, **caractérisé par le fait qu'**il présente un dispositif de mesure (5) pourvu d'une commande (51), qui est destiné à déterminer l'épaisseur moyenne a_{k,k+1} de la couche ablatée de la surface de l'échantillon dans une opération d'ablation A_{k,k+1} par le dispositif d'ablation (4), et qui, de préférence, peut être intégré dans le dispositif d'ablation (4) ou dans le microscope (2), en particulier dans le microscope à sonde de balayage (20).

5. Dispositif de détermination de la répartition spatiale d'une ou de plusieurs propriétés d'un échantillon (1) selon la revendication 1, 2, 3 ou 4, **caractérisé par le fait que** la commande (21) du microscope (2), en particulier la commande (201) du microscope à sonde de balayage (20), ainsi que la commande (31) de la sonde (3), la commande (41) du dispositif d'ablation (4), la commande (51) du dispositif de mesure (5) destiné à déterminer l'épaisseur moyenne a_{k,k+1} de la couche ablatée lors d'une opération d'ablation A_{k,k+1,} et la commande (61) du dispositif de traitement d'images (6) ou une quantité partielle de ces commandes sont connectées à une commande centrale, en particulier sont intégrées dans une commande centrale.

6. Dispositif de détermination de la répartition spatiale d'une ou de plusieurs propriétés d'un échantillon (1) selon la revendication 1, 2, 3 ou 4, **caractérisé par le fait que** la commande (61) du dispositif de traitement d'images (6) assisté par ordinateur est intégrée dans la commande (21) du microscope (2), en particulier dans la commande (201) du microscope à sonde de balayage (20).

7. Dispositif de détermination de la répartition spatiale d'une ou de plusieurs propriétés d'un échantillon (1) selon la revendication 1, 2, 3 ou 4, **caractérisé par le fait que** la commande (41) du dispositif d'ablation (4) est intégrée dans la commande (21) du microscope 2, en particulier dans la commande (201) du microscope à sonde de balayage (20).

8. Dispositif de détermination de la répartition spatiale d'une ou de plusieurs propriétés d'un échantillon (1) selon la revendication 1, 2, 3 ou 4, **caractérisé par le fait que** le dispositif d'ablation (4) agit globalement, c'est-à-dire que l'ablation effectuée par le dispositif d'ablation (4) se fait pour l'essentiel simultanément sur l'ensemble de la surface de l'échantillon à examiner.

9. Dispositif de détermination de la répartition spatiale d'une ou de plusieurs propriétés d'un échantillon (1) selon la revendication 1, 2, 3 ou 4, **caractérisé par le fait que** le dispositif d'ablation (4) agit localement dans les environs directs de la sonde (3), c'est-à-dire que l'ablation effectuée par le dispositif d'ablation (4) ne se fait que dans les environs directs de la sonde (3).

10. Procédé de détermination de la répartition spatiale de propriétés Pⱼ d'un échantillon (1), qui comprend les étapes suivantes de procédé :
a) déterminer la topographie zₙ(x,y) de la surface n d'un échantillon (1), qui s'étend pour l'essentiel dans un plan parallèle au plan x-y à z = zₙ, au moyen d'un microscope (2), en particulier au moyen d'un microscope à sonde de balayage (20), et une ou plusieurs propriétés Pⱼ(zₙ(x,y)) là-dessus au moyen d'une sonde (3), en particulier au moyen d'un microscope à sonde de balayage (20),
b) ablater une couche de la surface n de l'échantillon (1) pour l'essentiel dans la direction z au moyen d'un dispositif d'ablation (4) dans une opération d'ablation A_{n,n+1}, une nouvelle surface n+1 étant dégagée,
c) répéter m-fois les étapes a) et b) en caractérisant la surface d'échantillon n+i, i = 1,...,m respective, et ablater une autre couche de la surface n+i de l'échantillon (1) dans une opération d'ablation A_{n+i,n+i+1,} le nombre m étant déterminé par la dimension de la zone à caractériser de l'échantillon (1) et par la résolution souhaitée en profondeur, de préférence m étant compris entre 5 et 1000, en particulier m étant compris entre 10 et 500, et
d) générer une image à trois dimensions des propriétés Pⱼ de l'échantillon (1) à partir des topographies de surface zₙ(x,y) à zₙ₊ₘ(x,y) et des propriétés Pⱼ(zₙ(x,y)) à Pⱼ(zₙ₊ₘ(x,y)) au moyen d'un dispositif de traitement d'images (6) assisté par ordinateur.

11. Procédé de détermination de la répartition spatiale d'un paramètre dans l'échantillon (1), qui caractérise le taux d'ablation locale d'un échantillon (1), ledit procédé comprenant les étapes suivantes de procédé :
a) déterminer la topographie zₙ(x,y) de la surface n d'un échantillon (1), qui s'étend pour l'essentiel dans un plan parallèle au plan x-y à z = zₙ, au moyen d'un microscope (2), en particulier au moyen d'un microscope à sonde de balayage (20),
b) ablater une couche de la surface n de l'échantillon (1) pour l'essentiel dans la direction z dans une opération d'ablation A_{n,n+1} au moyen d'un dispositif d'ablation (4), une nouvelle surface n+1 étant dégagée,
c) répéter m-fois les étapes a) et b) en caractérisant la surface d'échantillon n+i, i = 1,...,m respective, et ablater une autre couche de la surface n+i de l'échantillon dans une opération d'ablation A_{n+i,n+i+1}, le nombre m étant déterminé par la dimension de la zone à caractériser de l'échantillon (1) et par la résolution souhaitée en profondeur, de préférence m étant compris entre 5 et 1000, en particulier m étant compris entre 10 et 500, et
d) déterminer les épaisseurs de couche a_{n+i,n+i+1}(x,y,z) ablatées localement durant les opérations d'ablation A_{n+i,n+i+1,} et
e) générer une image à trois dimensions des épaisseurs de couche a_{n+i,n+i+1}(x,y,z) ablatées localement ou d'un paramètre en déduit qui caractérise un taux d'ablation locale de l'échantillon, au moyen d'un dispositif de traitement d'images (6) assisté par ordinateur.

12. Procédé selon la revendication 10 ou 11, **caractérisé par le fait que** la position z locale absolue zₖ d'une surface k d'un échantillon (1) est déterminée à partir d'une position moyenne zₖ de cette surface k ou de zones partielles de cela, et à partir de l'écart local Δzₖ de la position moyenne zₖ, qui est déterminé au moyen d'un microscope (2), en particulier au moyen d'un microscope à sonde de balayage (20).

13. Procédé selon la revendication 12, **caractérisé par le fait que** la position moyenne zₖ d'une surface k d'un échantillon (1) ou de zones partielles de cela est déterminée à partir de la position moyenne zₖ₋₁ de la surface k-1 et de l'épaisseur de couche a_{k-1,k} ablatée durant l'opération intermédiaire d'ablation A_{k-1,k} et déterminée au moyen d'un dispositif de mesure (5) pour déterminer l'épaisseur moyenne aₖ₋ _{1,k} de la couche ablatée.

14. Procédé selon la revendication 10 ou 11, **caractérisé par le fait que**, pour déterminer la position moyenne zₖ d'une surface k d'un échantillon (1) ou de zones partielles de cela, on utilise les distances d_{M} dans la direction z par rapport à des objets (marques) 8 existant dans l'échantillon (1) ou ajoutés à cette fin, tels que fossés, billes, supports d'échantillon etc., dont les dimensions spatiales et positions spatiales sont connues avant que la surface n soit ablatée et ne changent pas ou changent de manière connue durant le procédé d'ablation.

15. Procédé selon la revendication 10 ou 11, **caractérisé par le fait que** la position latérale relative dans la direction x et y de deux surfaces voisines n et m ou de zones partielles de deux surfaces voisines n et m d'un échantillon (1) est déterminée au moyen des positions dans la direction x et y de structures sur une plus grande échelle ou d'objets (marques) 8 sur une plus grande échelle, ces structures sur une plus grande échelle ou ces objets (8) sur une plus grande échelle étant présents naturellement dans l'échantillon (1) ou ayant été ajoutés à cette fin, et leurs dimensions spatiales et positions spatiales étant connues avant que la surface n soit ablatée et ne changeant pas ou changeant de manière connue durant l'opération d'ablation.

16. Procédé selon la revendication 10 ou 11, **caractérisé par le fait que** le dispositif d'ablation (4) qui est utilisé pour l'ablation d'une couche de la surface de l'échantillon (1) à caractériser agit globalement, c'est-à-dire sur l'ensemble de la surface de l'échantillon à examiner.

17. Procédé selon la revendication 10 ou 11, **caractérisé par le fait que** le dispositif d'ablation (4) qui est utilisé pour l'ablation d'une couche de la surface de l'échantillon (1) à caractériser agit localement, c'est-à-dire dans les environs directs de la sonde (3), en particulier de la sonde (203) du microscope à sonde de balayage (20).

18. Procédé selon la revendication 10 ou 11, **caractérisé par le fait que** l'ablation d'une couche de la surface de l'échantillon au moyen du dispositif d'ablation (4) se fait in situ, c'est-à-dire sans qu'il soit nécessaire de sortir l'échantillon (1) de la position de service dans le microscope (2), en particulier dans le microscope à sonde de balayage (20).

19. Procédé selon la revendication 10 ou 11, **caractérisé par le fait que** l'ablation d'une couche de la surface de l'échantillon au moyen du dispositif d'ablation (4) se fait ex situ, c'est-à-dire que l'échantillon (1) est sorti de la position de service dans le microscope (2), en particulier dans le microscope à sonde de balayage (20), et est placé dans la position de service dans le dispositif d'ablation (4).
